# EUROPEAN PATENT SPECIFICATION

(11) **EP 2 226 242 B1**
(45) Date of publication and mention of the grant of the patent: **02.03.2016**
(21) Application number: 08866524.5
(22) Date of filing: 18.12.2008
(51) Int. Cl.: B62K 11/04, B62H 1/04

(54) **TWO-WHEELED MOTOR VEHICLE**
ZWEIRÄDRIGES MOTORFAHRZEUG
VEHICULE A MOTEUR A DEUX ROUES

(30) Priority: 28.12.2007 JP 2007341394; 28.12.2007 JP 2007341397; 14.03.2008 JP 2008066233; 15.12.2008 JP 2008318495
(43) Date of publication of application: 08.09.2010
(73) Proprietor: Yamaha Hatsudoki Kabushiki Kaisha, Iwata-shi, Shizuoka 438-8501 (JP)
(72) Inventor: MIZUTANI, Masami, Iwata-shi Shizuoka 438-8501 (JP); KATANO, Wataru, Iwata-shi Shizuoka 438-8501 (JP); IIZUKA, Toshio, Iwata-shi Shizuoka 438-8501 (JP)
(74) Representative: Zimmermann, Tankred Klaus
(86) International application number: PCT/JP2008/073092
(87) International publication number: WO 2009/084455

(56) References cited:
- JP-A- 56 047 373
- JP-A- 2001 048 080
- JP-A- 2005 188 316
- JP-A- 2006 315 504
- JP-A- 2006 315 657
- JP-U- 58 147 822
- JP-U- 63 147 379
- JP-U- 63 180 395
- JP-U- 63 180 395
- US-A1- 2006 242 952

## Description

### TECHNICAL FIELD

The present invention relates to a two-wheeled motor vehicle including an exhaust device which has a space inside for expanding exhaust gas flowing from an exhaust pipe.

### BACKGROUND ART

Two-wheeled motor vehicles include an exhaust device having a space inside for expanding exhaust gas flowing from an exhaust pipe connected to an engine. For example, a two-wheeled motor vehicle includes a muffler, serving as the exhaust device, which discharges expanded exhaust gas to the outside, the muffler being disposed on the lateral side of a rear wheel and positioned higher than a rear arm supporting the rear wheel while allowing it to bounce. Moreover, there is also available a two-wheeled motor vehicle including an exhaust chamber serving as the exhaust device, the exhaust chamber being disposed below a rear arm as well as between the rear wheel and an engine, or between the rear wheel and a portion of a vehicle frame that is positioned behind the engine. Installing the exhaust chamber on the two-wheeled motor vehicle enables the downsizing of a muffler disposed downstream of the exhaust chamber.

Some two-wheeled motor vehicles have a main stand which stands on the ground for supporting the vehicle body while keeping a rear wheel away from the ground (for example, the

Patent Document 1). In this kind of two-wheeled motor vehicle, the main stand in an unused state, that is, the main stand in a posture with its distal portion raised and closed against the vehicle body, is arranged to extend in the fore-and-aft direction between an engine and the rear wheel. Due to this, it is difficult to provide an exhaust device, such as an exhaust chamber, between the engine and the rear wheel on the two-wheeled motor vehicle having the main stand. As a result, the exhaust pipe needs be directly connected to a muffler disposed on the lateral side of the rear wheel.
[Patent Document 1] JP-A-2002-87360

JP 63 180395 U, on which the preamble of independent claims 1 and 2 is based, and US 2006/242952 A1 describe motorcycles including an exhaust system including an expansion chamber between an exhaust pipe and a muffler.

### DISCLOSURE OF THE INVENTION

It is an object of the invention to provide a two-wheeled motor vehicle having a main stand capable of inhibiting the enlargement of the rear portion of the vehicle body and achieving a vehicle body with a low center of gravity.

This object is achieved by a two-wheeled motor vehicle according to independent claims 1 and 2.

### Problems to be Solved by the Invention

However, when an engine capacity is designed to increase in the two-wheeled motor vehicle including a muffler directly connected to the exhaust pipe, the muffler is also required to be enlarged in accordance with the engine capacity. Consequently, when the engine capacity is designed to increase in this kind of two-wheeled motor vehicle, a rear portion of the vehicle body is enlarged because the muffler is disposed on the lateral side of the rear wheel. Moreover, because the muffler is positioned higher than the rear arm, it is difficult to lower the center of gravity of the vehicle body.

### Means for Solving the Problems

In order to solve the above problem, a two-wheeled motor vehicle according to the present invention includes:
an engine;
a vehicle frame having a vertical frame portion extending vertically at the rear of the engine;
a rear wheel disposed behind the vertical frame portion;
a rear arm arranged to extend in a fore-and-aft direction at the rear of the vertical frame portion and supported by the vertical frame portion so as to swing together with the rear wheel;
a main stand that extends in the fore-and-aft direction below the rear arm, includes paired support legs spaced apart from each other in a vehicle width direction, and supports a vehicle body when the paired support legs are pivoted to a posture of standing on the ground from a posture of being arranged to extend in a fore-and-aft direction; and
an exhaust device that is connected to an exhaust pipe extending from the engine and expands exhaust gas, which flows from the exhaust pipe, inside the exhaust device.

Further, at least a rear portion of the exhaust device is positioned lower than the rear arm as well as between the rear wheel and the vertical frame portion, and, in a plain view of the exhaust device and the main stand, at least a rear portion of the exhaust device is positioned between the paired support legs in the posture of being arranged to extend in the fore-and-aft direction.

According to the present invention, enlargement of the rear portion of the vehicle body can be suppressed. For example, by discharging exhaust gas to the outside from the exhaust device disposed between the vertical frame portion and the rear wheel without providing a muffler on the lateral side of the rear wheel, enlargement of the rear portion of the vehicle body can be suppressed. Moreover, in the two-wheeled motor vehicle in which a muffler is disposed on the lateral side of the rear wheel, the muffler disposed on the lateral side of the rear wheel can be downsized, so that enlargement of the rear portion of the vehicle body can be suppressed. Moreover, because the exhaust device is positioned lower than the rear arm, the center of gravity of the vehicle body can be lowered.

### BRIEF DESCRIPTION OF THE DRAWINGS

FIG. 1 is a side view showing an entire configuration of a two-wheeled motor vehicle according to the first embodiment of the present invention.
FIG. 2 is a drawing viewed from the direction of the arrow P in FIG. 3.
FIG. 3 is a side view (viewed from one side) of a portion around a main stand during running of the two-wheeled motor vehicle according to the first embodiment.
FIG. 4 is a side view (viewed from the opposite side) of the portion around the main stand during running of the two-wheeled motor vehicle according to the first embodiment.
FIG. 5 is a plane view of the muffler and the portion around the main stand during running of the two-wheeled motor vehicle according to the first embodiment.
FIG. 6 is a side view (viewed from the one side) of the portion around the main stand during the parking of the two-wheeled motor vehicle according to the first embodiment.
FIG. 7 is a side view showing the positional relationship between the main stand and the muffler during running of the two-wheeled motor vehicle according to the first embodiment.
FIG. 8 is a side view showing an outer appearance of a two-wheeled motor vehicle according to a second embodiment.
FIG. 9 is an enlarged side view of a vehicle body, which mainly shows the main stand of the two-wheeled motor vehicle according to the second embodiment.
FIG. 10 is a perspective view showing an entire vehicle frame of the two-wheeled motor vehicle according to the second embodiment.
FIG. 11 is a figure of the main stand of the two-wheeled motor vehicle according to the second embodiment as seen from the front of the vehicle body, in which the main stand is disposed in a closed-posture.
FIG. 12 is a figure of the main stand of the two-wheeled motor vehicle according to the second embodiment as seen from the front of the vehicle body, in which the main stand is disposed in a standing-posture.
FIG. 13 is a side view of the main stand and an exhaust chamber of the two-wheeled motor vehicle according to the second embodiment, in which the main stand is disposed in the closed-posture.
FIG. 14 is a bottom view of the main stand and the exhaust chamber of the two-wheeled motor vehicle according to the second embodiment, in which the main stand is disposed in the closed-posture.
FIG. 15 is a left side view of a two-wheeled motor vehicle according to a third embodiment.
FIG. 16 is a right side view of the two-wheeled motor vehicle according to the third embodiment, in which a vehicle cover etc. is removed from the vehicle body.
FIG. 17 is a perspective view of a rear arm and a cushion unit provided to the two-wheeled motor vehicle according to the third embodiment.
FIG. 18 is a plain view of an exhaust device unit provided to the two-wheeled motor vehicle according to the third embodiment.
FIG. 19 is a side view of the exhaust device unit shown in FIG. 18.

### BEST MODE FOR CARRYING OUT THE INVENTION

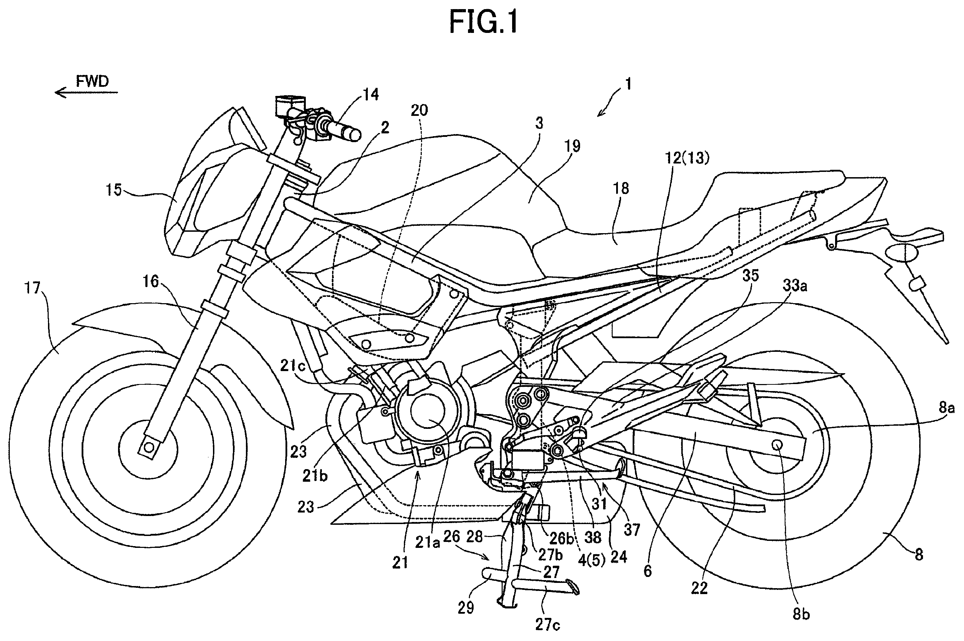

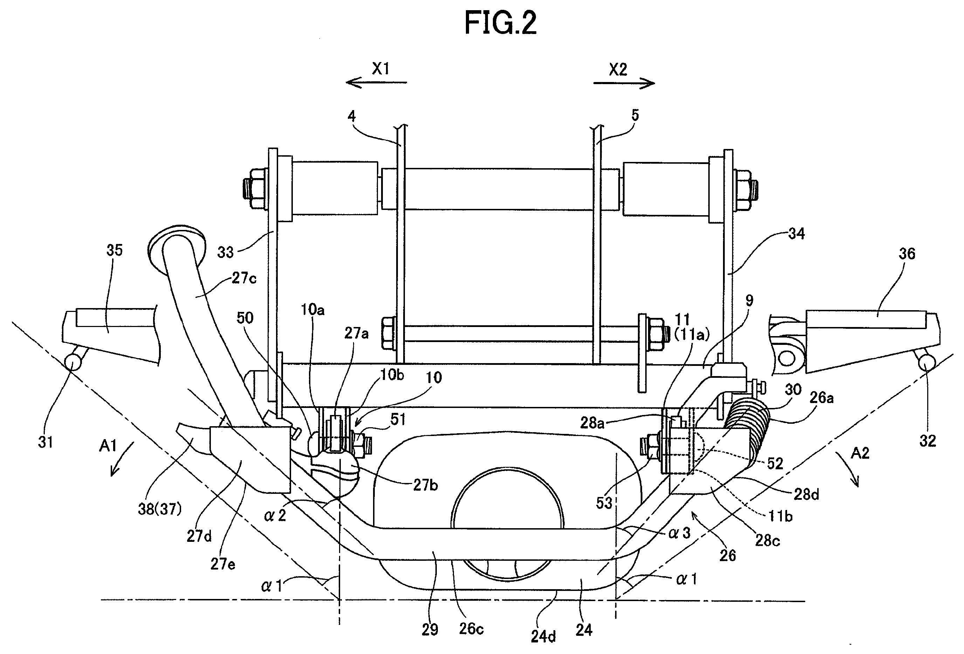

Hereinafter, the first embodiment of the present invention will be described with reference to drawings. FIG. 1 is a side view illustrating an entire configuration of a two-wheeled motor vehicle 1 which is an example of the first embodiment of the present invention. The two-wheeled motor vehicle 1 includes a muffler 24 provided as an exhaust device inside which exhaust gas flowing from an exhaust pipe expands. FIGs. 2 through 7 are drawings for describing in detail the configuration of the muffler 24 and the configuration around a main stand 26. In these figures, the "FWD" direction indicates a forward direction in the running direction of the two-wheeled motor vehicle 1.

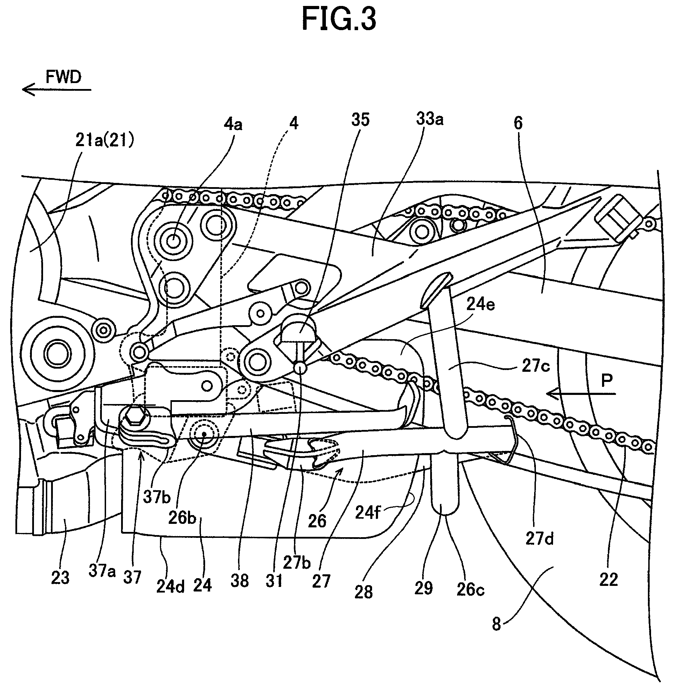

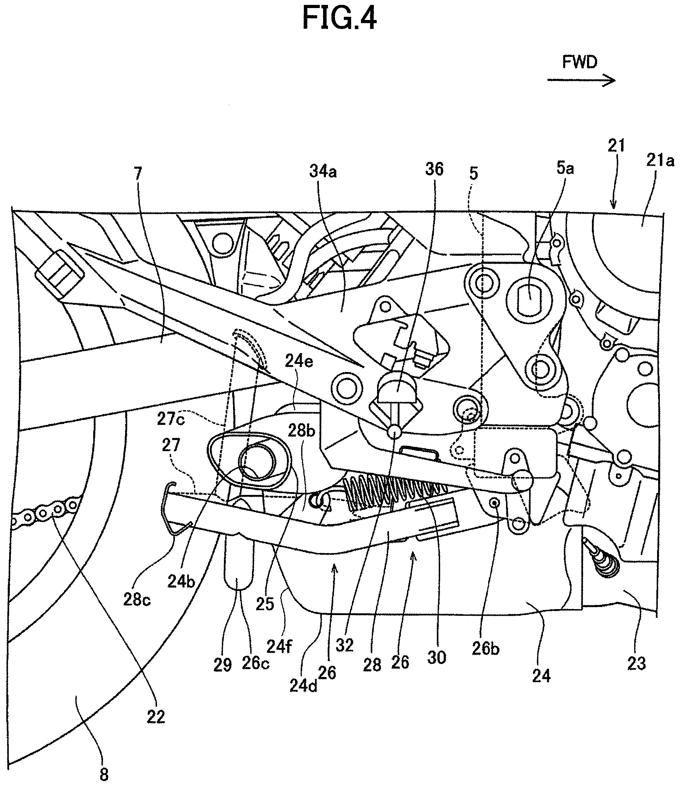

As shown in FIG. 1, in the two-wheeled motor vehicle 1, a main frame 3 extending in a fore-and-aft direction is disposed at the rear of a head pipe 2. As shown in FIGs. 1 and 2, paired right and left pivot support plates 4 and 5 (vertical frame portions) extending vertically at the rear of an engine 21 are arranged in a vicinity of the middle portion of the main frame 3 in the fore-and-aft direction. Paired rear arms 6 and 7 arranged to extend in the fore-and-aft direction are arranged at the rear of the pivot support plates 4 and 5, and the right and left rear arms 6 and 7 are spaced away from each other in a vehicle width direction. As shown in FIG. 3, the pivot support plate 4 is provided with a pivot 4a supporting a rear arm 6 while allowing it to swing around a portion adjacent to the front end of the rear arm 6. As shown in FIG. 4, the pivot support plate 5 is proved with a pivot 5a supporting a rear arm 7 while allowing it to swing around a portion adjacent to the front end of the rear arm 7. At the rear of the engine 21, a rear wheel 8 is disposed (refer to FIG. 1). Moreover, an axle 8b of the rear wheel 8 is rotatably fixed at each portion adjacent to each rear end of the rear arm 6 and the rear arm 7 (refer to FIG. 1), so that the rear arms 6 and 7 are capable of swinging around the pivots 4a and 5a together with the rear wheel 8. In this regard, the axle 8b of the rear wheel 8 is positioned lower than the pivots 4a and 5a, so that the rear arms 6 and 7 extend rearward inclining downward. As shown in FIG. 2, a connecting member 9 extending in the vehicle width direction (in the directions indicated with the arrow X1 and the arrow X2) is fixed to lower ends of the paired pivot support plates 4 and 5. On the lower surface of the connecting member 9, paired attachment members 10 and 11 extending downward are attached. These attachment members 10 and 11 are provided for an attachment of a rotatable main stand 26 which is described later.

As shown in FIG. 1, a back stay 12 is interposed between a rear portion of the main frame 3 and the pivot support plate 4. In addition, a back stay 13 is interposed between a rear portion of the main frame 3 and the pivot support plate 5. Incidentally, the head pipe 2, the main frame 3, the pivot support plate 4, the pivot support plate 5, the connecting member 9, the back stay 12, and the back stay 13 constitute a vehicle body frame.

A handlebar 14 is turnably mounted on an upper portion of the head pipe 2. A headlight 15 is disposed ahead of the head pipe 2. Moreover, a pair of front forks 16 including a suspension for absorbing the shock in the vertical direction is disposed below the head pipe 2. A front wheel 17 is rotatably fixed to the lower ends of the paired front forks 16.

A seat 18 is disposed above a rear portion of the main frame 3. A fuel tank 19 is disposed ahead of the seat 18.

An engine holding member 20 for suspending an engine 21 is mounted below the main frame 3. The engine 21 is a parallel four-cylinder engine in which four cylinders (not shown in the figures) are arranged in the vehicle width direction. The engine 21 includes: a crankcase 21a inside which a crankshaft (not shown in the figures) extends in the vehicle width direction; a cylinder body 21b which extends forwardly upward from an upper portion of the crankcase 21a, and in which four cylinders (not shown in the figures) are arrayed in the vehicle width direction; and a cylinder head 21c disposed above the cylinder body 21b.

A drive chain 22 for transmitting the driving force generated by the engine 21 to the rear wheel 8 extends rearward from a rear portion of the crankcase 21a. This drive chain 22 is wound around a drive sprocket (not shown) provided on the crankcase 21a and a driven sprocket 8a provided on the rear wheel 8, and meshes with these sprockets. The driven sprocket 8a is positioned closer to the center in the vehicle width direction (that is, closer to the rear wheel 8) than the rear arm 6, so that the drive chain 22 is positioned closer to the center side in the vehicle width direction than the rear arm 6 (refer to FIG. 1).

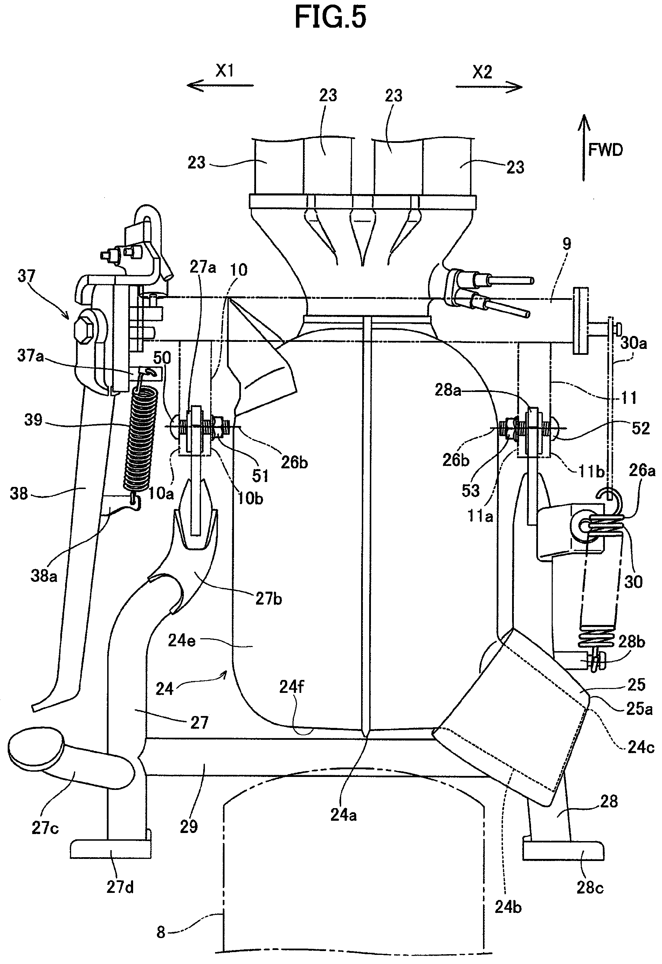

Each of four exhaust pipes 23 for discharging the exhaust gas generated by the operation of the engine 21 has one end (the distal side) fixed to a front portion of the cylinder head 21c. Each exhaust pipe 23 extends rearward from the cylinder head 21c. In this embodiment, each exhaust pipe 23 extends downward from the front portion of the cylinder head 21c, and after that, curves rearward and then extends toward a rear lower portion of the engine 21. As shown in FIGs. 3 and 5, each of the four exhaust pipes 23 has the other end connected to single muffler 24. As shown in FIG. 1, the muffler 24 is interposed between the engine 21 and the rear wheel 8, and has a function not only to purify the exhaust gas yielded from the engine 21 but also to reduce the exhaust noise. That is, a space (an expansion chamber) where the exhaust gas expands is formed inside the muffler 24 and the exhaust gas is discharged to the outside after expanding in the space, and thereby an exhaust noise generated at the time of the discharge is reduced. Moreover, a catalyst is disposed in the muffler 24, and thereby the amount of CO, HC, and NOx etc. in the exhaust gas is reduced by the operation of the catalyst.

As shown in FIGs. 3 through 5, a rear portion 24e of the muffler 24 is disposed below the rear arms 6 and 7 in a side view of the vehicle body. Moreover, the rear portion 24e is disposed behind the engine 21 and ahead of the rear wheel 8. That is, as shown in FIG. 5, the muffler 24 is arranged such that its rear end 24a is positioned ahead of the rear wheel 8 and a given clearance is formed between the rear end 24a and the front of the rear wheel 8. The rear end 24a of the muffler 24 and the front of the rear wheel 8 are arranged such that a lower part of the clearance is larger than an upper part of the clearance. In other words, a rear surface 24f of the muffler 24 is disposed ahead of the rear wheel 8 and inclined forward such that the distance between the rear surface 24f and the rear wheel 8 becomes larger toward the bottom. Moreover, the rear portion 24e of the muffler 24 is positioned closer to the center in the vehicle width direction than a lower portion of the drive chain 22 which extends, in a side view of the vehicle body, in the fore-and-aft direction below the rear arm 6 (refer to FIG. 3).

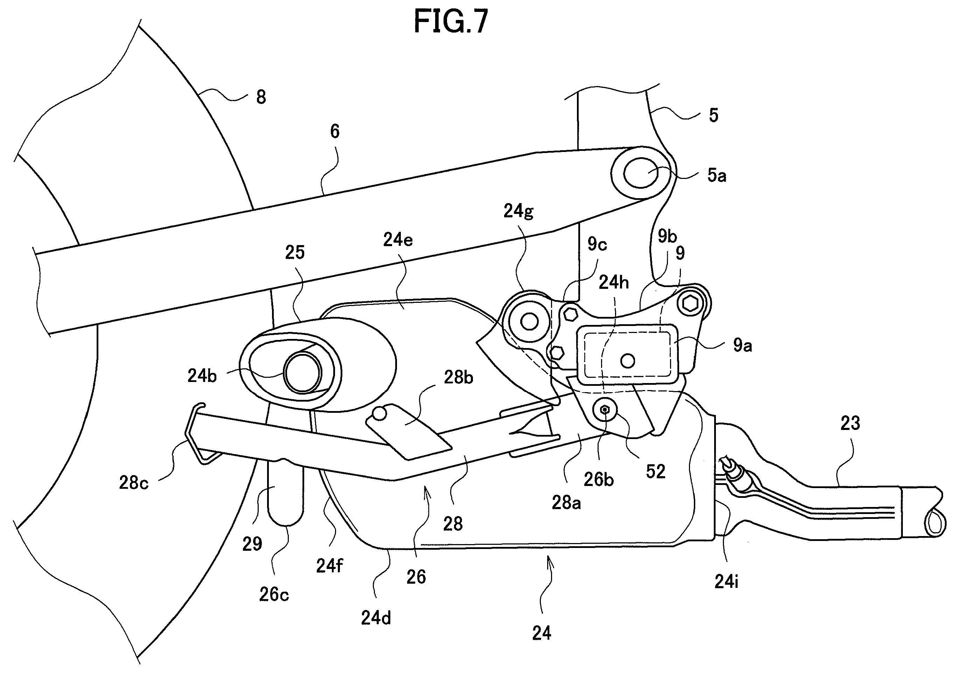

As shown in FIG. 3, 4 or 7, the rear portion 24e of the muffler 24 is positioned behind the pivot support plates 4 and 5 extending vertically at the rear of the engine 21. In addition, the muffler 24 is formed to extend forward below the pivot support plates 4 and 5. As described above, in this embodiment, the connecting member 9 bridges between the lower ends of the pivot support plates 4 and 5. The muffler 24 is formed to extend forward below the connecting member 9, and as shown in FIG. 7, a front portion 24h of the muffler 24 is positioned below the connecting member 9. In addition, a connecting port 24i positioned on a front end of the muffler 24 and connected to the exhaust pipe 23 is positioned further forward than the pivot support plates 4 and 5 and the connecting member 9. The rear portion 24e of the muffler 24 is positioned further rearward than a line connecting a pivot center 26b of the main stand 26 and the pivots 4a and 5a which serve as the center of the swinging of the rear arms 6 and 7.

Incidentally, as shown in FIG. 7, the muffler 24 is supported by the connecting member 9. More specifically, a plate like bracket 24g extending upward is provided on an outer surface of the muffler 24. Meanwhile, the connecting member 9 has a bracket 9b and a rear bracket 9c fixed to the bracket 9b and extending rearward from the bracket 9b. The bracket 24g of the muffler 24 is attached to the rear bracket 9c.

As shown in FIG. 5, the rear portion 24e of the muffler 24 includes, on its outer side in the vehicle width direction (on the side of the arrow X2), a portion on which an exhaust outlet 24b for discharging the exhaust gas to the outside (to the ambient air) is attached. The exhaust outlet 24b is formed to extend obliquely rearward in the direction of the arrow X2. The exhaust outlet 24b is obliquely open rearward and outward in the vehicle width direction from the rear portion 24e of the muffler 24. As shown in Fig. 4, the exhaust outlet 24b is positioned between the rear arm 7 and the main stand 26 during running of the two-wheeled motor vehicle 1, so that the exhaust gas discharged from the exhaust outlet 24b does not directly hit the rear wheel 8. Moreover, a cover member 25 is provided to cover the outer peripheral portion of the exhaust outlet 24b. As shown in FIG. 5, in a plane view, that is, when the muffler 24 is viewed from above, a distal portion of the exhaust outlet 24b is housed in the cover member 25 so as not to protrude from the cover member 25.

A distal portion (outermost portion) 24c, defined in a direction of the arrow X2, of the exhaust outlet 24b is positioned more toward the side of the arrow X1 (the inner side) than an outermost portion 26a, positioned on the side of the arrow X2, of the main stand 26. In other words, the outermost portion 24c of the exhaust outlet 24b is positioned closer to the center in the vehicle width direction than the outermost portion 26a of the main stand 26 in the vehicle width direction. In this embodiment, a tension coil spring 30 is provided in a front portion of the main stand 26, and the lateral portion of the front end of the tension coil spring 30 defines the outermost portion 26a of the main stand 26. In addition, similar to the exhaust outlet 24b, a distal portion 25a, on the side of the arrow X2, of the cover member 25 is positioned more toward the side of the arrow X1 (the inner side) than the outermost portion 26a, positioned on the side of the arrow X2, of the main stand 26.

The two-wheeled motor vehicle 1 includes the main stand 26 for supporting the vehicle body in a state where the rear wheel 8 is separated from the ground when the two-wheeled motor vehicle 1 is parked. As shown in FIG. 5, the main stand 26 is disposed on both lateral sides of the muffler 24 in the vehicle width direction (in the directions directed with the arrow X1 and the arrow X2). The main stand 26 extends in the fore-and-aft direction below the rear arms 6 and 7 and has paired right and left support legs 27 and 28 spaced apart from each other in the vehicle width direction. The main stand 26 pivots upward or downward around the pivot center 26b. The two-wheeled motor vehicle 1 is capable of running in a state where the paired support legs 27 and 28 are raised rearward and arranged to extend in the fore-and-aft direction (a state of FIG. 3). On the other hand, the paired support legs 27 and 28 pivot downward from a posture of being arranged to extend in the fore-and-aft direction to a posture of standing on the ground, and thereby the vehicle body is supported by the two portions spaced apart from each other in the vehicle width direction. That is, the main stand 26 supports the vehicle body in a state where the rear wheel 8 is separated from the ground.

As shown in FIG. 3 or 5, the pivot center 26b of the main stand 26 is positioned higher than the lowest portion 24d of the muffler 24. Thus, during running (that is, in a state illustrated in FIG. 3), the lowest portion 26c of the main stand 26 is positioned higher that the lowest portion 24d of the muffler 24. In other words, during running, the main stand 26 is disposed such that the entire main stand 26 is positioned higher than the lowest portion 24d of the muffler 24. In this embodiment, the support legs 27 and 28 are positioned higher than the lower surface of the muffler 24, and an upper portion of the rear portion 24e of the muffler 24 is positioned between the support legs 27 and 28 and the rear arms 6 and 7 in a side view of the vehicle body.

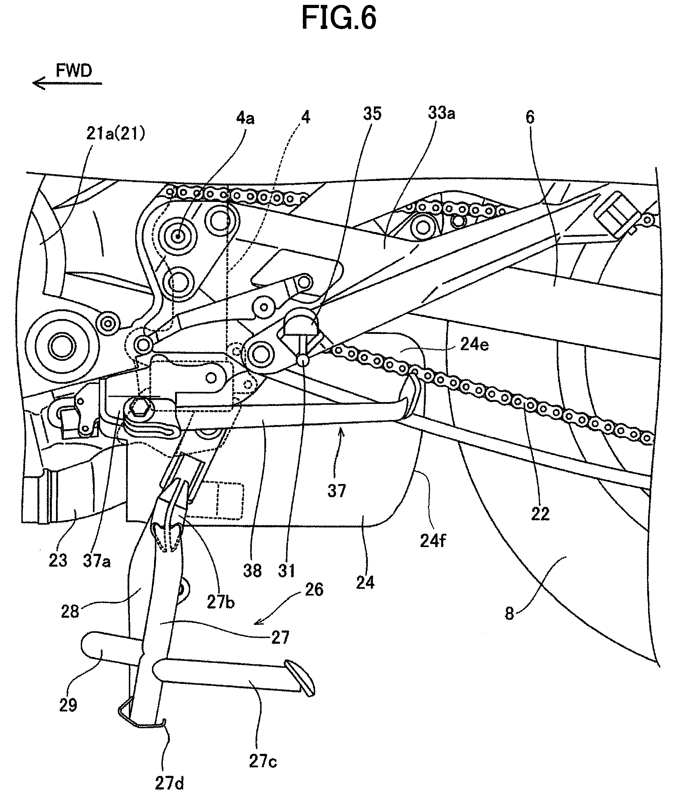

As shown in FIGs. 5 and 6, in addition to the paired support legs 27 and 28 for supporting the vehicle body at the time of parking (in the state illustrated in FIG. 6) described above, the main stand 26 includes a cross pipe 29 that connects the paired support legs 27 and 28 together. Note that, the cross pipe 29 defines an example of "a connecting portion" referred to in the present invention. As shown in FIG. 5, the support leg 27 is positioned on the side of the arrow X1 of the muffler 24, and the support leg 28 is positioned on the side of the arrow X2 of the muffler 24. In other words, in a plane view of the muffler 24 and the main stand 26, the rear portion 24e of the muffler 24 is positioned between the paired support legs 27 and 28 in the posture of being arranged to extend in the fore-and-aft direction. In the embodiment described herein, as described above, because the pivot center 26b of the support legs 27 and 28 is positioned higher than the lower surface of the muffler 24, the rear portion 24e of the muffler 24 is positioned between the support legs 27 and 28 when the support legs 27 and 28 are arranged to extend in the fore-and-aft direction. The main stand 26 is arranged such that during running (in a state illustrated in FIGs. 3 and 5), both ends of the main stand 26 in the vehicle width direction (in the directions directed with the arrow X1 and the arrow X2) are positioned further outward than both lateral ends of the muffler 24 in the vehicle width direction.

The support leg 27 has one end (a proximal portion) which is rotatably connected to the attachment member 10 attached on the lower surface of the connecting member 9. More specifically, as shown in FIGs. 2 and 5, a bearing member 27a is attached to the one end of the support leg 27. The bearing member 27a is interposed between one plate 10a and the other plate 10b of the attachment member 10, and the support leg 27 is fixed to the attachment member 10 by a screw 50 and a nut 51.

As shown in FIG. 5, the support leg 27 has a curved shape so that the other end (that is, the ground side (the distal side)) of the support leg 27 is widened out toward the outside (the side of the arrow X1). A reinforcing member 27b is attached on the curved portion of the support leg 27, because a load from the vehicle body is concentrated on this portion during parking. Moreover, the end portion of the cross pipe 29, on the side of the arrow X1, is welded on the vicinity of the other end (the ground side) of the support leg 27.

Moreover, the support leg 27 has a foot bar 27c (a lateral protruding member) welded to a vicinity of the portion to which the cross pipe 29 is welded, and thereby the main stand 26 easily pivots to the posture for parking with the foot bar 27c stepped on by riders. As shown in FIG. 3, in a side view of the vehicle body, the foot bar 27c is arranged to extend upward between the muffler 24 and the rear wheel 8 when the support legs 27 and 28 are arranged to extend in the fore-and-aft direction, that is, during running of the two-wheeled motor vehicle 1.

A contact plate 27d coming into contact with the ground through its surface is attached to the other end (that is, the ground side) of the support leg 27. That is, when the support leg 27 is disposed to stand on the ground, the lower surface of the contact plate 27d contacts with the ground. As shown in FIG. 2, an end portion 27e of the contact plate 27d is formed to incline inward during running at an inclination angle not greater than a bank angle α1 (described later).

As shown in FIG. 5, the support leg 28 has one end (the proximal portion) rotatably connected to the attachment member 11 attached to the lower surface of the connecting member 9. More specifically, as shown in FIGs. 2 and 5, a bearing member 28a is attached to the one end of the support leg 28. The bearing member 28a is interposed between one plate 11a and the other plate 11b of the attachment member 11, and the support leg 28 is fixed to the attachment member 11 by a screw 52 and a nut 53.

As shown in FIG. 5, a spring attachment member 28b protruding to the side of the arrow X2 is attached to a portion between the one end (the proximal portion) and the other end (the distal portion) of the support leg 28. One end of a tension coil spring 30 is attached to the spring attachment member 28b, and the other end of the tension coil spring 30 is connected to one end, positioned on the side of the arrow X2, of the connecting member 9 through a metal plate 30a. Additionally, as described above, a portion adjacent to the other end of the tension coil spring 30 defines the outermost portion 26a of the main stand 26. Moreover, the outermost portion 26a is positioned further outward in the direction of the arrow X2 than the distal portion 24c, positioned on the side of the arrow X2, of the exhaust outlet 24b and the distal portion 25a, positioned on the side of the arrow X2, of the cover member 25. Moreover, a portion of the cross pipe 29 on the side of the arrow X2 is welded on the vicinity of the other end of the support leg 28.

Moreover, similar to the contact plate 27d of the support leg 27, a contact plate 28c coming into contact with the ground through its surface is attached to the other end (the ground side) of the support leg 28. As shown in FIG. 2, an end portion 28d of the contact plate 28c is formed to incline inwardly during running at an inclination angle not greater than the bank angle α1 described later.

As shown in FIG. 3, the cross pipe 29 is interposed between the muffler 24 and the rear wheel 8 during running of the vehicle. That is, in a state where the paired support legs 27 and 28 are arranged to extend in the fore-and-aft direction, the cross pipe 29 extends in the vehicle width direction behind the muffler 24. As shown in FIGs. 3 through 5, in this state, the cross pipe 29 is disposed between the rear end 24a of the muffler 24 and the rear wheel 8, and an upper portion of the rear portion 24e of the muffler 24 is surround by the paired support legs 27 and 28, the cross pipe 29, and the connecting member 9 provided at the lower end of the pivot support plates 4 and 5. In other words, the muffler 24 is equipped in the two-wheeled motor vehicle 1 while utilizing a space located below the rear arms 6 and 7 and behind the pivot support plate 4 and 5, and enclosed by the main stand 26.

As shown in FIG. 2, the vicinity of the middle, in the vehicle width direction (in the directions of the arrow X1 and the arrow X2), of the cross pipe 29 is formed to protrude downward during running. That is, in a state where the support legs 27 and 28 extend in the fore-and-aft direction, the cross pipe 29 is formed such that the middle portion of the cross pipe 29 in the vehicle width direction is positioned lower than lateral end portions of the cross pipe 29. In this embodiment, the cross pipe 29 is formed to extend from the middle to the outside in the vehicle width direction while inclining upward. In addition, as shown in FIG. 3, the vicinity of the middle, in the vehicle width direction (in the directions of the arrow X1 and the arrow X2), of the cross pipe 29 is positioned in the lower part of the space between a rear surface 24f of the muffler 24 and the rear wheel 8. Moreover, the lowest portion of the cross pipe 29 is positioned higher than the lowest portion of the muffler 24. Therefore, in spite of the fact that the cross pipe 29 is formed to protrude downward as shown in the embodiment, the minimum ground clearance of the two-wheeled motor vehicle 1 can be prevented from being reduced.

As shown in FIG. 5, during running, the cross pipe 29 is arranged to overlap with the rear wheel 8 in a plane view of the main stand 26. That is, the cross pipe 29 is formed below a forwardly protruding portion (a front end portion) of the rear wheel 8 to avoid any contact with it during running. Therefore, in a state where the support legs 27 and 28 are arranged to extend in the fore-and-aft direction, the cross pipe 29 is positioned below the front end of the rear wheel 8.

As shown in FIG. 2, vicinities of both ends, defined in the vehicle width direction (in the directions of the arrow X1 and the arrow X2), of the cross pipe 29 are inclined inwardly at inclination angles α2 and α3 with respect to the vertical direction during running, where the inclination angles α2 and α3 are not greater than the maximum inclination angle of the vehicle body (the bank angle α1). That is, as described above, both lateral portions of the cross pipe 29 are inclined upward in a state where the paired support legs 27 and 28 extend in the fore-and-aft direction. Moreover, the inclination angles α2 and α3 of the cross pipe 29 with respect to the vertical direction are not greater than the bank angle α1. With this structure, during running, the cross pipe 29 can avoid the forwardly bulging portion of the rear wheel 8 toward the lower side, and be inclined at the bank angle α1.

Note that the bank angle α1 is defined as the maximum inclination angle at the time when the vehicle body is inclined in the A1 and the A2 directions shown in FIG. 2. Moreover, the two-wheeled motor vehicle 1 includes bank sensors 31 and 32 that allow the rider to recognize the bank angle α1. As shown in FIGs. 2 through 4, brackets 33a and 34a are attached to paired plate members 33 and 34 supported by the paired pivot support plates 4 and 5, and footrests (steps) 35 and 36 on which riders can place their feet are respectively attached to the brackets 33a and 34a. These footrests 35 and 36 protrude in the X1 and the X2 direction respectively, and the bank sensors 31 and 32 are attached to lower portions of the footrests 35 and 36 respectively. Additionally, the rear portion 24e of the muffler 24 is disposed between the left bracket 33a and the footrest 35, as well as between the right bracket 34a and the footrest 36.

As shown in FIG. 2, the bank sensor 31 firstly contacts with the ground when the vehicle body becomes inclined in the A1 direction shown in FIG. 2. This allows the rider to recognize the bank angle α1 (the maximum inclination angle) of the vehicle body with respect to the vertical direction when the vehicle body is inclined in the A1 direction. Moreover, the bank sensor 32 firstly contacts with the ground when the two-wheeled motor vehicle 1 becomes inclined in the A2 direction shown in FIG. 2. This allows the rider to recognize the bank angle α1 (the maximum inclination angle) of the vehicle body with respect to the vertical direction when the vehicle body is inclined in the A2 direction.

As shown in FIG. 3 or 5, a side stand 37 for supporting the vehicle body in a posture of being inclined is attached to an end, positioned on the side of the arrow X1, of the connecting member 9. The side stand 37 includes a support leg 38 arranged to extend in the fore-and-aft direction below the rear arm 6. The support leg 38 is capable of pivoting around one end (the proximal portion) of the support leg 38. The vehicle body is supported in its posture of being inclined with the support leg 38 which is pivoted around its one end to stand on the ground. As shown in FIG. 5, a spring attachment member 38a is attached to a portion of the support leg 38 positioned on the side of the arrow X2, and one end of a tension coil spring 39 is attached to the spring attachment member 38a. The other end of the tension coil spring 39 is connected to an attachment portion 37a supporting the support leg 38 capable of pivoting, and connecting the side stand 37 to the connecting member 9.

As shown in FIG. 3, during running, the lowest portion 37b of the side stand 37 is positioned higher than the lowest portion 26c of the main stand 26. Moreover, as shown in FIG. 2, during running, the side stand 37 is positioned higher than a limit defined by the bank angle α1 shown in FIG. 2.

As described above, in the two-wheeled motor vehicle 1, the rear portion 24e of the muffler 24 is positioned lower than the rear arms 6 and 7 as well as between the pivot support plates 4 and 5 and the rear wheel 8. Also, in a plane view of the muffler 24 and the main stand 26, the rear portion 24e is disposed between the paired support legs 27 and 28 in a posture of being arranged to extend in the fore-and-aft direction. This suppresses the enlargement of the rear portion of the vehicle body. That is, as in the two-wheeled motor vehicle 1, by discharging the exhaust gas to the outside from the muffler 24 disposed between the engine 21 and the rear wheel 8 without providing the muffler on the lateral side of the rear wheel 8, enlargement of the rear portion of the vehicle body can be suppressed. In this regard, in the two-wheeled motor vehicle in which the muffler is disposed on the lateral side of the rear wheel, the muffler disposed on the lateral side of the rear wheel can be downsized, so that enlargement of the rear portion of the vehicle body can be suppressed. Moreover, the muffler 24 is positioned lower than the rear arms 6 and 7, which can lower the position of the center of gravity of the vehicle body.

Moreover, in the two-wheeled motor vehicle 1, the muffler 24 is provided to extend forward below the pivot support plates 4 and 5 in a side view of the vehicle body. With this structure, the space inside the muffler 24 can be increased.

Moreover, in the two-wheeled motor vehicle 1, the muffler 24 includes the exhaust outlet 24b for discharging the exhaust gas to the outside. With this structure, the exhaust gas can be discharged to the outside without providing a muffler, for discharging the exhaust gas to the outside, on the lateral side of the rear wheel 8. As a result, enlargement of the rear portion of the vehicle body is further suppressed.

Moreover, in the two-wheeled motor vehicle 1, the exhaust outlet 24b is obliquely open rearward and outward in the vehicle width direction. This prevents the exhaust gas discharged from the exhaust outlet 24b from directly hitting on the rear wheel 8.

Moreover, in the two-wheeled motor vehicle 1, the exhaust outlet 24b is positioned higher than the support legs 27 and 28 in a posture of being arranged to extend in the fore-and-aft direction. That is, in the two-wheeled motor vehicle 1, the exhaust outlet 24b is disposed in a rear portion of the muffler 24, as well as between the rear arm 7 and the main stand 26 in a state of running. This prevents the exhaust outlet 24b from hitting with the rear wheel 8 disposed behind the muffler 24. Moreover, the exhaust gas can be discharged by effectively utilizing a space between the main stand 26 and the rear arm 7.

Moreover, in the two-wheeled motor vehicle 1, the outermost portion 24c of the exhaust outlet 24b in the vehicle width direction (in the direction of the arrow X2) is positioned further inward (toward the side of the arrow X1) than the outermost portion 26a of the main stand 26 in the vehicle width direction (in the direction of the arrow X2). Accordingly, the main stand 26 protects the exhaust outlet 24b from the physical impact in the lateral direction (in the direction of the arrow X2).

Moreover, in the two-wheeled motor vehicle 1, the main stand 26 includes the cross pipe 29 for connecting the paired support legs 27 and 28 together. Further, the cross pipe 29 is arranged to extend in the vehicle width direction at the rear of the muffler 24, in a state where the paired support legs 27 and 28 are arranged to extend in the fore-and-aft direction. With this structure, the muffler 24 can be protected by the cross pipe 29.

Moreover, in the two-wheeled motor vehicle 1, the cross pipe 29 is positioned between the rear wheel 8 and the rear end 24a of the muffler 24, in a state where the paired support legs 27 and 28 are arranged to extend in the fore-and-aft direction. Because of this, the main stand 26 including the paired support legs 27 and 28 can be disposed while utilizing a small clearance between the rear end 24a of the muffler 24 and the rear wheel 8.

That is, in the conventional two-wheeled motor vehicle having the rear wheel, the engine, and the muffler interposed between the lower portion of the engine and the rear wheel, there is inconvenience that it is difficult to dispose a member other than the muffler between the engine and the rear wheel. Due to this, in the conventional two-wheeled motor vehicle, it is difficult to provide the main stand for supporting the two-wheeled motor vehicle during parking with two portions thereof spaced away from each other in the vehicle width direction body. Regarding this point, in the two-wheeled motor vehicle 1, the muffler 24 is disposed such that the rear end 24a is positioned ahead of the rear wheel 8. Further, the main stand 26 is arranged such that during running, the cross pipe 29 is positioned between the rear end 24a of the muffler 24 and the rear wheel 8. With this structure, the main stand 26 having the paired support legs 27 and 28 can be installed to the two-wheeled motor vehicle 1 while a small clearance between the rear end 24a of the muffler 24 and the rear wheel 8 is effectively utilized.

Moreover, in the two-wheeled motor vehicle 1, in a state where the paired support legs 27 and 28 are arranged to extend in the fore-and-aft direction, the rear portion 24e of the muffler 24 is surrounded by the paired support legs 27 and 28 and the cross pipe 29. With this structure, the muffler 24 can be protected more reliably.

Moreover, in the two-wheeled motor vehicle 1, in a state where the paired support legs 27 and 28 are arranged to extend in the fore-and-aft direction, the cross pipe 29 is disposed below the front end portion of the rear wheel 8. With this structure, the clearance between the muffler 24 and the rear wheel 8 can be utilized more effectively.

Moreover, in the two-wheeled motor vehicle 1, the cross pipe 29 is formed such that in a state where the paired support legs 27 and 28 are arranged to extend in the fore-and-aft direction, the middle portion of the cross pipe 29 in the vehicle width direction is positioned lower than both lateral ends of the cross pipe 29. That is, the cross pipe 29 is formed such that the vicinity of the middle, in the vehicle width direction (in the directions of the arrow X1 and the arrow X2), of the cross pipe 29 protrudes downward during running. With this structure, the cross pipe 29 can be disposed to avoid contacting with the most bulging portion (front end portion) of the rear wheel 8.

Moreover, the two-wheeled motor vehicle 1 includes the bank sensors 31 and 32 that come into contact with the ground when the vehicle body is inclined at the maximum inclination angle α1. Moreover, in a state where the paired support legs 27 and 28 are arranged to extend in the fore-and-aft direction, the cross pipe 29 is disposed to extend from the center in the vehicle width direction to the outside in the vehicle width direction and to be inclined upward, and the inclination angles α2 and α3 of the cross pipe 29 with respect to the vertical direction is not greater than the maximum inclination angle α1. That is, portions adjacent to both ends, defined in the vehicle width direction (in the directions of the arrow X1 and the arrow X2), of the cross pipe 29 are formed to be inclined inwardly at inclination angles α2 and α3 with respect to the vertical direction when the vehicle is running, where the inclination angles α2 and α3 are not greater than the bank angle α1 (the maximum inclination angle) of the vehicle body. This prevents the bank angle α1 of the vehicle body from becoming smaller due to provision of the cross pipe 29 to the main stand 26.

Moreover, in the two-wheeled motor vehicle 1, the main stand 26 is positioned higher than the lower surface of the muffler 24. With this structure, the side surfaces of the muffler 24 can be protected by the main stand 26.

Moreover, in the two-wheeled motor vehicle 1, the pivot center 26b of the main stand 26 is positioned higher than the lowest portion 24d of the muffler 24. With this structure, the main stand 26 can be positioned higher the lowest portion 24d of the muffler 24 when the main stand 26 is pivoted upward during running.

Moreover, the two-wheeled motor vehicle 1 includes the side stand 37 arranged to extend in the fore-and-aft direction below the rear arm 6 and supporting the vehicle body in a posture of being inclined through its pivoting and standing on the ground. Further, the side stand 37 is disposed higher than the main stand 26. That is, during running, the side stand 37 is not the lowest part of the two-wheeled motor vehicle 1. This prevents the minimum ground clearance from becoming smaller due to provision of the side stand 37.

Moreover, in the two-wheeled motor vehicle 1, the main stand 26 is arranged such that during running, both the end portions of the main stand 26 in the vehicle width direction (in the directions of the arrow X1 and the arrow X2) are positioned further outward than both the end portions of the muffler 24 in the vehicle width direction. Moreover, during running, the lowest portion 26c of the main stand 26 is positioned higher than the lowest portion 24d of the muffler 24. This prevents the main stand 26 from hitting with the lower surface of the muffler 24 when the main stand 26 is pivoted upward. Moreover, the main stand 26 can be positioned higher than the lowest portion 24d of the muffler 24 without forming a recess on the lower surface of the muffler 24 to avoid being hit. As a result, the volume of the muffler 24 is prevented from becoming smaller, and during running, the distance between the main stand 26 and the ground is prevented from becoming smaller.

In the two-wheeled motor vehicle 1, the side stand 37 is provided in addition to the main stand 26. However, only the main stand 26 may be provided without the side stand 37.

Also, in the two-wheeled motor vehicle 1, the cross pipe 29 is formed such that the vicinity of the middle of the cross pipe 29 in the vehicle width direction protrudes downward. However, the cross pipe 29 may be formed such that the vicinities of both lateral ends of the cross pipe 29 in the vehicle width direction protrude downward in addition to the vicinity of the middle of the cross pipe 29 in the vehicle width direction.

Also, in the two-wheeled motor vehicle 1, the exhaust outlet 24b for discharging the exhaust gas is provided on the rear portion 24e of the muffler 24. However, at the rear of the muffler 24 that functions to purify the exhaust gas discharged from the engine 21 and to reduce exhaust noise, an exhaust outlet functioning to purify the exhaust gas discharged from the engine 21 and to reduce exhaust noise may be further provided. In such a case, the functions to purify the exhaust gas discharged from the engine 21 and to reduce exhaust noise may be provided to the overall exhaust outlet. Moreover, the functions to purify the exhaust gas discharged from the engine 21 and to reduce exhaust noise may be provided to only a portion of the exhaust outlet positioned ahead of the rear wheel 8.

Next, the second embodiment according to the present invention will be described with reference to the drawings.

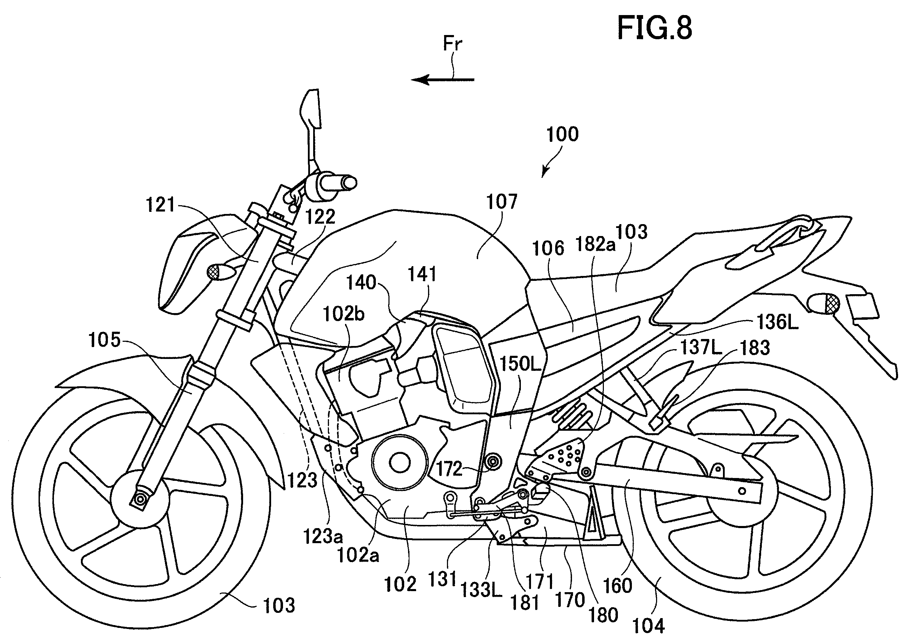

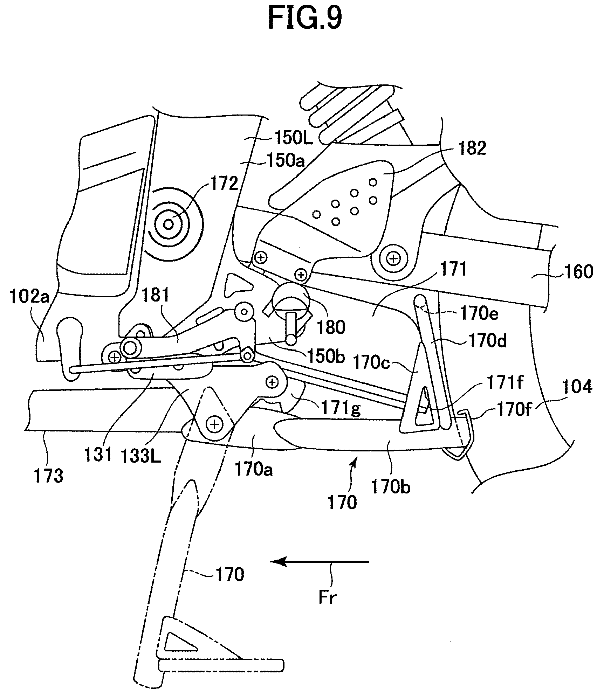

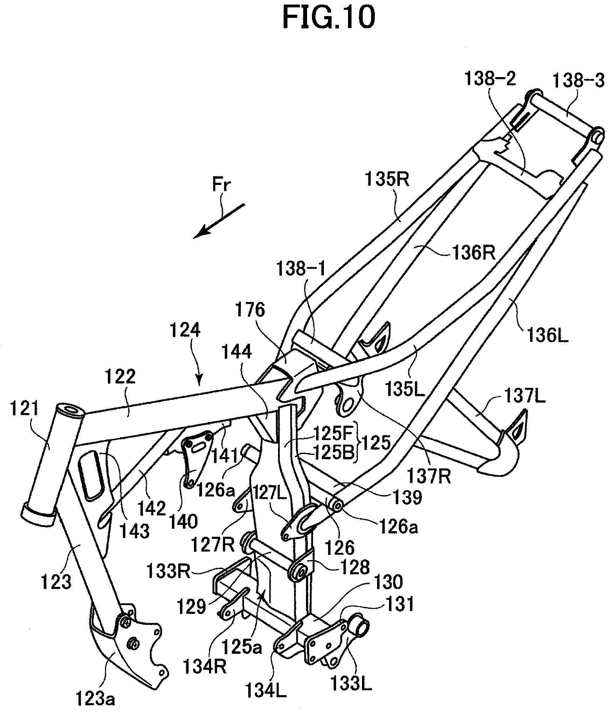

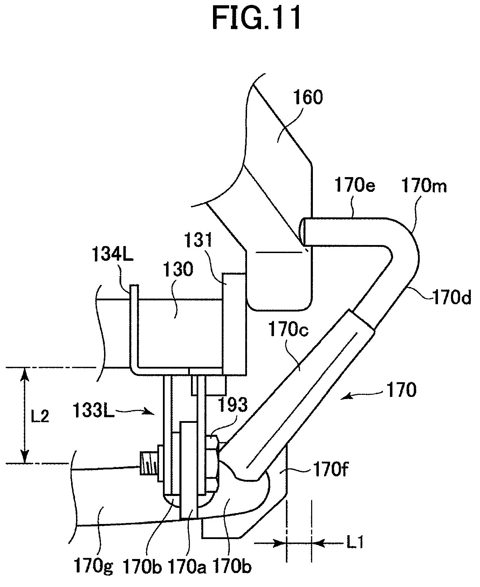

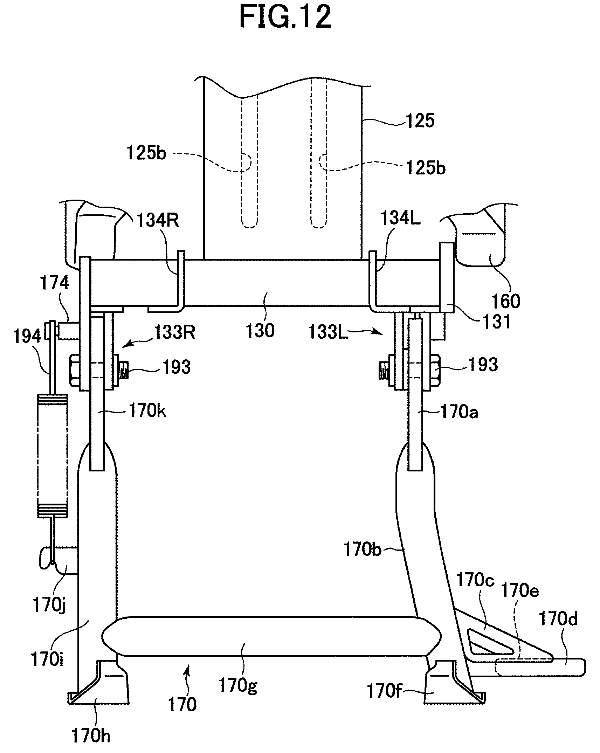

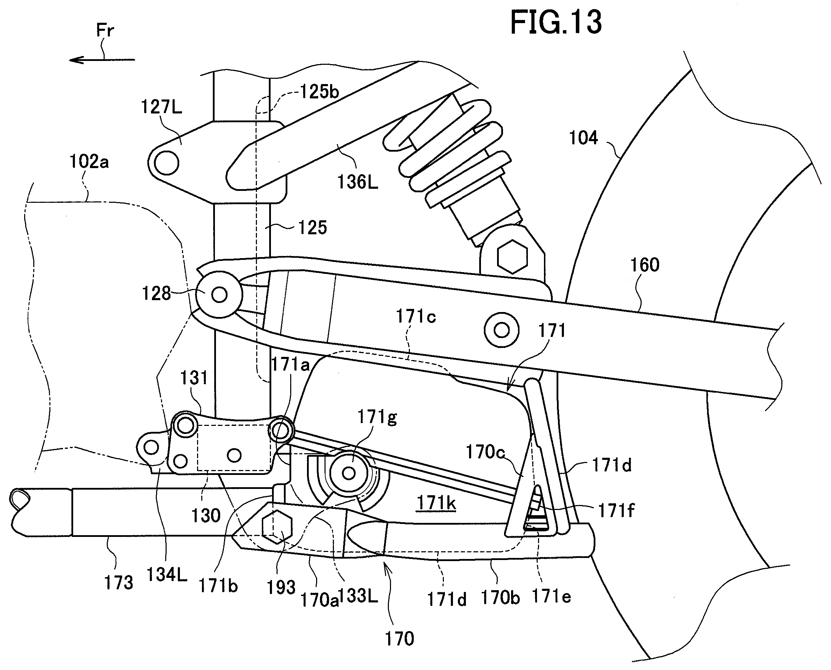

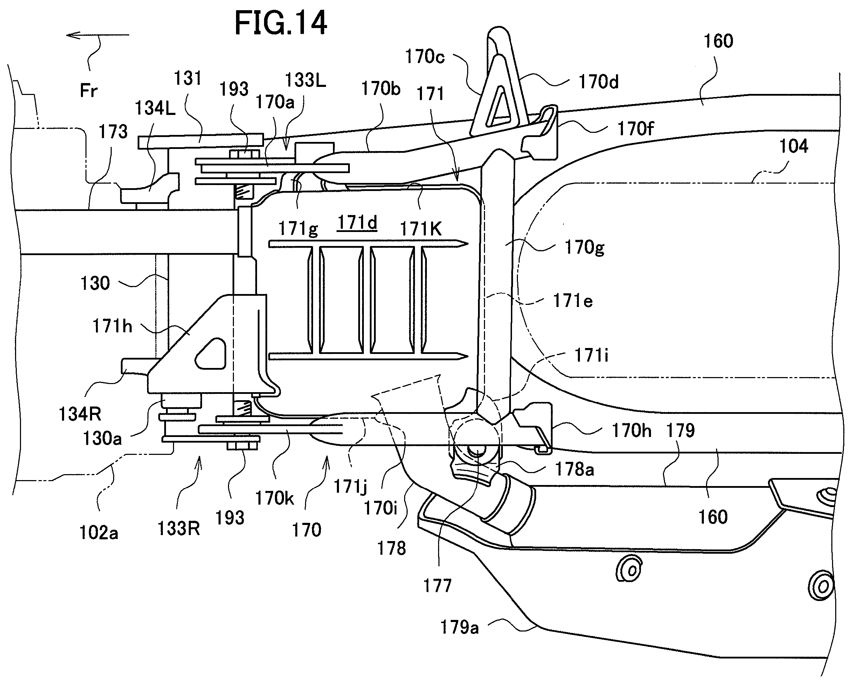

FIG. 8 is a side view showing an outer appearance of a two-wheeled motor vehicle 100 according to this embodiment. FIG. 9 is an enlarged side view of a vehicle, which mainly shows a main stand (center stand) 170 of the two-wheeled motor vehicle 100. FIG. 10 is a perspective view showing an entire vehicle frame of the two-wheeled motor vehicle 100. FIG. 11 shows the main stand 170 in a closed-posture viewed from the front of the vehicle body. FIG. 12 shows the main stand 170 in a standing-posture viewed from the front of the vehicle body. FIG. 13 is a side view of the main stand 170 in the closed-posture, and an exhaust chamber 171. FIG. 14 is a bottom view of the main stand 170 in the closed-posture, and the exhaust chamber 171. In the drawings described herein, the exhaust chamber 171 is provided as an exhaust device inside which exhaust gas flowing from an exhaust pipe expands.

As shown in FIG. 8, in the two-wheeled motor vehicle 100, an upper portion of front forks 105, which supports a front wheel 103 while allowing it to rotate, is supported by a head pipe 121 so that right-and-left turning can be performed. As shown in FIG. 10, a fore-and-aft extending portion 122 of a main frame 124, whose front portion is welded to the rear of the head pipe 121, extends linearly rearward and downward from the head pipe 121 while being positioned in the center of the vehicle in the width direction. Moreover, an upper end of a down tube 123 is welded to the head pipe 121. The down tube 123 extends straight and downward from its upper end, and a bracket 123a is mounted at a lower end portion of the down tube 123. As shown in FIG. 8, the bracket 123a is fixed to the front side of a crankcase 102a of an engine 102. Moreover, a hanger 140 is attached to the middle portion of the fore-and-aft extending portion 122 through a reinforcing member 141. The hanger 140 extends downward from the middle portion of the fore-and-aft extending portion 122. A cylinder body 102b of the engine 102 is fixed to the distal portion of the hanger 140.

A side plate 150L which serves as a part of a member for rigidity of the vehicle body is disposed at the rear of the engine 102. A through bolt 172 extending in the vehicle width direction is disposed in the vicinity of the center of the side plate 150L in the vertical direction. A rear arm (rear swing arm) 160 is disposed at the rear of the engine 102 while extending in the fore-and-aft direction. A front end portion of the rear arm 160 is rotatably supported by the through bolt 172. A rear end portion of the rear arm 160 supports a rear wheel 104. This structure allows the rear arm 160 to swing vertically around the through bolt 172 together with the rear wheel 104.

As shown in FIG. 8, a saddle-type fuel tank 107 is disposed on the fore-and-aft extending portion 122, and a seat 103 is disposed behind the fuel tank 107. An area below a rear portion of the fuel tank 107, as well as below the seat 103, is covered with a side cover 106 which is a resin outer cover. As shown in FIG. 10, the fore-and-aft extending portion 122 of the main frame 124 is a straight round pipe extending from the head pipe 121 to a vicinity of the rear end of the fuel tank 107. A saddle shaped bracket 176 is welded to a rear end of the fore-and-aft extending portion 122 while covering the rear end of the fore-and-aft extending portion 122 from above. Front end portions of paired right and left seat rails 135L and 135R are respectively welded on both side surfaces of the saddle shaped bracket 176. The seat rails 135L and 135R are constituted by round pipes and extend obliquely rearward from the side surfaces of the saddle shaped bracket 176 to the outside (that is, toward the outside in the vehicle width direction). After that, the seat rails 135L and 135R extend straightly rearward and upward. Moreover, the seat rails 135L and 135R are coupled with each other at three portions by cross members 138-1, 138-2, and 138-3 arrayed in this order from the front of the vehicle. The seat 103 is disposed on these seat rails 135L and 135R.

A vertically-extending portion (vertical frame portion) 125 extending straightly in the vertical direction of the vehicle body at the rear of the engine 102 is welded to a rear end of the fore-and-aft extending portion 122. Both of the fore-and-aft extending portion 122 and the vertically-extending portion 125 are welded to the saddle shaped bracket 176 and a reinforcing member 144, and they are firmly fixed to each other by the saddle shaped bracket 176 and the reinforcing member 144 disposed on an inner corner of their connection portion, and constitute the main frame 124.

A reinforcing member 143 is welded to an inner corner of a connection portion among the fore-and-aft extending portion 122, the head pipe 121, and the down tube (round pipe) 123. Moreover, the reinforcing member 141 is welded to a lower side of a middle portion of the fore-and-aft extending portion 122. Moreover, a reinforcing pipe 142 bridges between the reinforcing member 141 and the reinforcing member 143. With this structure, the fore-and-aft extending portion 122, the head pipe 121, and the down tube 123 can be firmly fixed to each other.

The vertically-extending portion 125 is constituted by a front pipe 125F and a back pipe 125B, each of which is a square pipe with a rectangular cross section. In the vertically-extending portion 125, the front pipe 125F and the back pipe 125B are affixed on each other by welding while being arranged such that their wider side surfaces face in the fore-and-aft direction of the vehicle body. The vertically-extending portion 125 has an even width at the upper portion, its width becomes gradually wider at the middle portion, and its width becomes an even width again at the lower portion. That is, the vertically-extending portion 125 is formed such that its width changes in accordance with positions in the extending direction (vertical direction). As a result, the rigidity required for the vehicle body is secured.

A first support pipe 126 is welded to a rear surface of the back pipe 125B of the vertically-extending portion 125. The first support pipe 126 is a round pipe and extends straight in the vehicle width direction. A cap 126a in which a female screw groove is formed is welded to both lateral ends of the first support pipe 126.

L-shaped common brackets 127L and 127R are welded to both lateral side surfaces of the vertically-extending portion 125 and positioned below the first support pipe 126. The common brackets 127L and 127R are formed into a shape of a flat plate whose rear ends are bent inward (toward the center in the vehicle width direction). Their bent portions are welded to a rear surface of the back pipe 125B, and inner surfaces of their portions extending in the fore-and-aft direction are welded to lateral side surfaces of the front pipe 125F and lateral side surfaces of the back pipe 125B. Each front end of the common brackets 127L and 127R protrudes further forward than the front surface of the front pipe 125F of the vertically-extending portion 125. In their protruding portions, a bolt insertion hole for fixing to an upper portion of the rear surface of the crankcase 102a is formed.

A front end of each of the back stays 136L and 136R constituted by a round pipe is welded on an outside surface of the extending portion of the common brackets 127L and 127R, which extend in the fore-and-aft direction. The back stays 136L and 136R extend rearward and upward, and their rear ends are respectively welded to lower surfaces of the rear portions of the seat rails 135L and 135R. Moreover, a cross member 139 is welded on the front end sides of the back stays 136L and 136R, thereby coupling the back stays 136L and 136R together. Moreover, proximal ends of rear footrest stays 137L and 137R for mounting a footrest 183 (refer to FIG. 8) on which fellow passengers place their feet are welded on middle portions of the back stays 136L and 136R. The rear footrest stays 137L and 137R extend downward from their proximal portions.

A pivot bracket 128, which is an elongated plate including left and right portions bent forward, is attached below the common brackets 127L and 127R. Each bent portion of the pivot bracket 128 is welded to the lateral side surfaces of the front pipe 125F and the back pipe 125B, and the portion between the bent portions is welded to a rear surface of the back pipe 125B. Front ends of the bent portions protrude further forward than the front surface of the front pipe 125F. Through holes for inserting a pivot support pipe 129, which is a round pipe extending straight in the vehicle width direction, are formed in the protruding portions of the pivot bracket 128. The pivot support pipe 129 is inserted through the through holes and fixed by welding.

A second support pipe 130 extending straight in the vehicle width direction is disposed on a lower end of the vertically-extending portion 125. The vertically-extending portion 125 and the second support pipe 130 are connected to each other to thereby form a shape of an upside-down T letter. The second support pipe 130 is a square pipe with a rectangular cross section and disposed such that its wider side surfaces face in the vertical direction. An upper surface of the second support pipe 130 is welded to a lower end surface of the vertically-extending portion 125. A small plate 131 in a shape of a flat plate is welded to a left end of the second support pipe 130, while closing the opening end of the second support pipe 130. Moreover, a main stand bracket 133L constituted by two parallel plates extending downward is welded on the left portion of the lower surface of the second support pipe 130.

As shown in FIG. 9, 13, or 14, a substantially box-shaped exhaust chamber 171 is disposed at the rear of the vertically-extending portion 125 and in front of the rear wheel 104. The exhaust chamber 171 is disposed below the rear arm 160, and an upper surface 171c of the exhaust chamber 171 extends obliquely rearward and downward along the rear arm 160. An exhaust pipe 173 extending from the engine 102 and then passing below the engine 102 toward the rear is connected to the exhaust chamber 171. More specifically, a front surface 171a of the exhaust chamber 171 is positioned behind the second support pipe 130 and provided with a connecting port 171b. The exhaust pipe 173 extends rearward below the second support pipe 130 to be connected to the connecting port 171b.

The exhaust chamber 171 is supported by the second support pipe 130. More specifically, an attachment portion 171g is provided on a left side surface 171k of the exhaust chamber 171 while being formed to swell outward from the left side surface 171k. The attachment portion 171g is attached to a main stand bracket 133L welded to the second support pipe 130. In FIG. 13, the main stand bracket 133L is shown by a phantom line. As shown in FIG. 14, an attachment portion 130a protruding downward is provided on a lower surface of the second support pipe 130. Meanwhile, a plate-like bracket 171h is provided on the right portion of a lower surface 171d of the exhaust chamber 171 while extending forward from the lower surface 171d. The bracket 171h is attached to the attachment portion 130a. In this way, the exhaust chamber 171 is supported by the second support pipe 130.

A space for expanding exhaust gas flowing from the exhaust pipe 173 is formed inside the exhaust chamber 171. A muffler 179 is disposed on the lateral side of the rear wheel 104 (in this embodiment, disposed in the right side of the rear wheel 104) and positioned higher than the rear arm 160. The muffler 179 is connected to the exhaust chamber 171 through a connecting pipe 178. More specifically, the connecting pipe 178 extends obliquely rearward toward the outer side of the vehicle body from a right side surface 171j of the exhaust chamber 171, and is connected to the muffler 179. Also, a space for expanding exhaust gas flowing from the exhaust chamber 171 is formed inside the muffler 179. Moreover, an exhaust outlet (not shown) for discharging exhaust gas to the outside is provided on a rear end portion of the muffler 179. In this regard, the muffler 179 is covered by a muffler cover 179a from the outside in the vehicle width direction. In addition, a plate-like bracket 178a is provided on the outer circumferential surface of the connecting pipe 178. Meanwhile, a plate-like bracket 171i extending toward the bracket 178a is attached to the lower surface 171d of the exhaust chamber 171. The bracket 178a and the bracket 171i are overlapped and fixed to each other by a bolt 177. By doing this, the connecting pipe 178 is supported by the exhaust chamber 171.

The exhaust chamber 171 is fixed to the main stand bracket 133L. A left proximal portion of the main stand 170 surrounding the exhaust chamber 171 while being arranged in the closed-posture is rotatably fixed to the main stand bracket 133L (refer to FIG. 9). The main stand bracket 133R is welded on the right end side of the second support pipe 130. The main stand bracket 133R is also constituted by two parallel plates extending downward, and its outer plate is welded to an opening right end of the second support pipe 130 while closing the opening. Its inner plate is welded on the lower surface of the second support pipe 130. A right proximal portion of the main stand 170 is fixed to the main stand bracket 133R while being capable of rotating.

Moreover, as shown in FIG. 10, engine brackets 134L and 134R are welded on a front surface of the second support pipe 130, while protruding forward. With this structure, a lower portion of a rear side-surface of the crankcase 102a is fixed. That is, a front portion of the crankcase 102a of the engine 102 is fixed to the down tube 123, and an upper portion of a rear portion of the crankcase 102a is fixed to the vertically-extending portion 125 through the common brackets 127L and 127R. Moreover, a lower portion of the rear portion of the crankcase 102a is fixed to the vertically-extending portion 125 through the engine brackets 134L and 134R and the second support pipe 130. Moreover, the cylinder body 102b is fixed to the fore-and-aft extending portion 122 through the hanger 140 and the reinforcing member 141. By doing this, the engine 102 is firmly fixed to the respective portions of the vehicle frame to thereby serve as one of members for rigidity of the vehicle body.

Additionally, a recess 125a to avoid the swelling portion of the crankcase 102a is formed on the lower right portion of a front surface of the front pipe 125F. Moreover, as shown in FIG. 12, two grooves 125b extending vertically are formed on a rear surface of the back pipe 125B. The grooves 125b extend from below the pivot bracket 128 and then reach the side of rear ends of the common brackets 127L and 127R. This structure improves the strength of the vertically-extending portion 125.

As shown in FIGs. 8 and 9, a side plate 150L is disposed to the left of the vertically-extending portion 125 of the main frame 124, while being spaced away from the vertically-extending portion 125. In a similar manner, a side plate (not shown) is disposed to the right of the vertically-extending portion 125, while being spaced away from it. These side plates are members made by aluminum die casting, and are members having substantially the same shape.

As shown in FIG. 9, the side plate 150L integrally includes a plate portion 150a formed into a plate shape extending in the vertical direction of the vehicle body, and a footrest bracket portion 150b extending rearward from a lower portion of the plate portion 150a, so that the side plate 150L has the shape of substantially a letter L in a side view. An insertion hole for inserting the through bolt 172 serving as the pivot is formed in the center of the plate portion 150a. The through bolt 172 inserted through the insertion hole passes through the front end portion of the rear arm 160 and the pivot support pipe 129, and then reaches an insertion hole formed on the side plate disposed on right side of the vehicle body. A nut is screwed onto the tip portion of the through bolt 172. In this way, the rear arm 160 is supported by the through bolt 172 while being capable of swinging.

Moreover, an upper portion of the side plate 150L is fixed to the left end of the first support pipe 126 by a bolt. Also, a lower portion of the side plate 150L is fixed to the small plate 131 by two bolts. In this way, the side plate 150L is firmly fixed to the vehicle frame at positions below and above the through bolt 172 serving as the pivot.

A footrest bracket supporting a proximal portion of a footrest 180 (refer to FIG. 9) is formed on a rear end portion of the footrest bracket portion 150b of the side plate 150L. The footrest bracket portion 150b and the footrest 180 are disposed on the lateral sides (the right side and the left side) of the exhaust chamber 171. Moreover, a pivot insertion hole for inserting the pivot of a shift pedal 181 is formed on a substantially middle portion of the footrest bracket portion 150b. In addition, a cover bracket portion is formed on an upper edge of the footrest bracket portion 150b, and a metal cover 182 that covers the lateral side of the rear arm 160 is fastened to the cover bracket portion by a bolt.

As shown in FIGs. 9, 11, and 12, the main stand 170 includes paired right and left support legs (main pipes) 170b and 170i extending in the fore-and-aft direction below the rear arm 160 when the main stand 170 is arranged in a closed-posture.

The support leg 170b is a round pipe positioned on the left side of the vehicle body, and arranged to extend in the vertical direction of the vehicle body when the main stand 170 is disposed in a standing-posture. An attachment plate 170a further extending in the extending direction of the support leg 170b is welded on a proximal portion of the support leg 170b. Moreover, a small metal plate 170f is welded to the distal end of the support leg 170b, while covering the end surface of the support leg 170b. Front and rear Edges of the small metal plate 170f are curved upward. The attachment plate 170a is inserted between the plates constituting the main stand bracket 133L. An insertion hole is formed in the attachment plate 170a, and a bolt 193 to be tightened to the main stand bracket 133L is inserted into the insertion hole, thereby rotatably supporting the attachment plate 170a.

In a similar manner, the support leg 170i is a round pipe positioned on the right side of the vehicle body, and is arranged to extend in the vertical direction of the vehicle body when the main stand 170 is disposed in the standing-posture. An attachment plate 170k further extending in the extending direction of the support leg 170i is welded on a proximal portion of the support leg 170i. Moreover, a small metal plate 170h is welded to the distal end of the support leg 170i, while covering the end surface of the support leg 170i. Front and rear edges of the small metal plate 170h are curved upward. The attachment plate 170k is inserted between the plates constituting the main stand bracket 133R. An insertion hole is formed in the attachment plate 170k, and a bolt 193 to be tightened to the main stand bracket 133R is inserted into the insertion hole, thereby supporting the attachment plate 170k while being capable of rotating. The vicinities of the distal ends of the support legs 170b and 170i are coupled with each other through a cross pipe (cross member) 170g constituted by a round pipe. The bolt insertion holes of the attachment plates 170a and 170k are positioned on a common center line. In this way, the main stand 170 can integrally pivot around the line passing through the center of the bolt insertion holes.

Additionally, the main stand bracket 133R has a spring attachment boss 174 formed thereon, which is formed to extend outward from the vehicle body. The spring attachment boss 174 is positioned further forward, as well as higher, than the insertion hole of the attachment plate 170k for inserting the bolt 193. Also, a hook 170j extending outward from the vehicle body is formed on a middle portion of the support leg 170i. Moreover, a spring 194 is disposed between the spring attachment boss 174 and the hook 170j, and urges their positions to be attracted to each other. In this way, the main stand 170 is urged to stay in the closed-posture when it is positioned in the closed-posture, and is urged to stay in the standing-posture when it is positioned in the standing-posture.

Moreover, the main stand bracket 133L is positioned closer to the vertically-extending portion 125 of the main frame 124 than the main stand bracket 133R. Thus, the support leg 170b disposed on the left side of the vehicle body is slightly bent to the left side at its middle portion. With this structure, the metal plate 170f can be located further leftward, which leads to stable supporting of the vehicle body when standing.

A proximal end of a foot bar 170d, which is a metal bar having a diameter smaller than that of the support leg 170b, is welded on the distal portion of the support leg 170b disposed on the left side of the vehicle body, that is, disposed on the metal plate 170f side thereof. The foot bar 170d is substantially perpendicular to the support leg 170b. A triangle reinforcing member for reinforcing the support leg 170b is welded on the fixing portion between the foot bar 170d and the support leg 170b. The foot bar 170d extends straight to the upper and outer side of the vehicle body, and its distal portion 170e is bent to the inner side of the vehicle body (toward the center in the vehicle width direction). As shown in FIGs. 9 and 11, when the main stand 170 is disposed in the closed-posture, the distal portion 170e of the foot bar 170d is directed straight to the inner side of the vehicle body. With this structure, riders can easily place their toes on the distal portion 170e of the main stand 170 disposed in the closed-posture.

As stated above, the exhaust chamber 171 is disposed between the vertically-extending portion 125 and the rear wheel 104. As shown in FIG. 9 or 13, in a side view of the vehicle body, the exhaust chamber 171 is positioned between the main stand 170 in the closed-posture and the rear arm 160. Moreover, as shown in FIG. 14, in a bottom view of the vehicle body, the exhaust chamber 171 is positioned between the support leg 170b and the support leg 170i when the main stand 170 is in the closed-posture, that is, when the support legs 170b and 170i are arranged to extend in the fore-and-aft direction. In this embodiment, as shown in FIG. 13, the support legs 170b and 170i are positioned lower than the exhaust chamber 171 when the main stand 170 is placed in the closed-posture. More specifically, in a state where the support legs 170b and 170i are arranged to extend in the fore-and-aft direction, the support legs 170b and 170i are located at substantially the same height as the lower surface 171d of the exhaust chamber 171, and lower portions in outer circumferential surfaces of the support legs 170b and 170i are located lower than the lower surface 171d. Moreover, the cross pipe 170g is located at substantially the same height as the lower surface 171d of the exhaust chamber 171, and thus the exhaust chamber 171 is arranged to have the lower surface 171d surrounded by the main stand 170. In this regard, a lower portion of a rear surface 171e of the exhaust chamber 171 is inclined rearward, so that a rear end portion 171f of the exhaust chamber 171 is positioned above the cross pipe 170g.

Moreover, the foot bar 170d provided on the distal side of the left support leg 170b extends upward when the support legs 170b and 170i are arranged to extend in the fore-and-aft direction. Also, in a side view of the vehicle body, the foot bar 170d is positioned between the rear surface 171e of the exhaust chamber 171 and the rear wheel 104.

In the two-wheeled motor vehicle 100 as described above, the following advantages exist compared to the conventional two-wheeled motor vehicle. Conventionally, there is available a two-wheeled motor vehicle having a configuration that allows riders to easily press down a foot bar by using a small plate-like pedal attached to the distal portion of the foot bar. However, attaching the pedal to the distal portion of the foot bar by welding or the like invites an increase in the cost. Moreover, the small plate-like pedal does not necessarily allow riders to press it down easily. In this regard, there is available another two-wheeled motor vehicle having a configuration in which a distal portion of a foot bar is bent outward from the vehicle body. This configuration makes it easier for riders to step down on the distal portion of the foot bar, and achieves a cost reduction of the main stand.

However, in the configuration in which the distal portion of the foot bar is bent outward from the vehicle body, there is a problem that the outer appearance could be deteriorated because the distal portion of the foot bar extends to the outside of the vehicle body and a distal end surface of the foot bar faces the lateral side of the vehicle body when the foot bar is seen from the lateral side of the two-wheeled motor vehicle. Moreover, there is another problem that it is difficult to perform a so-called main stand turn. The main stand turn is defined as an operation where a rider standing on the side of the vehicle body inclines the vehicle body to the rider's side in a state where a main stand is upright, supports the entire vehicle body while using only the distal end of the support leg, and after that, turns the two-wheeled motor vehicle on the distal end of the support leg. The main stand turn is used to turn the direction of the two-wheeled motor vehicle in a narrow space. In the configuration where the distal portion of the foot bar is bent to the outside, when the two-wheeled motor vehicle is inclined for performing the main stand turn, the distal end of the foot bar tends to come into contact with the ground. Therefore, it is difficult to support the entire vehicle body only by the distal portion of one support leg. As a result, it is difficult to perform the main stand turn.

Regarding this problem, in the two-wheeled motor vehicle 100, the main stand 170 includes the paired right and left support legs 170b and 170i positioned below the vehicle body as well as between the front wheel 103 and the rear wheel 104. Moreover, the proximal portions of the support legs 170b and 170i are supported with the vehicle frame so that the support legs 170b and 170i are capable of pivoting between the standing-posture, in which each support leg extends to the ground, and the closed-posture, in which each distal portion of the support legs (metal plates 170f and 170h) approaches the lower portion of the vehicle body. Moreover, the proximal portion of the foot bar 170d is attached to the distal portion of the left support leg 170b of the vehicle body, and the foot bar 170d extends in the upper and outer direction of the vehicle body when the support leg 170b is in the closed-posture, and its distal portion 170e is bent to the inner side of the vehicle body. Because of this, the distal portion 170e of the foot bar 170d extends to the inner side of the vehicle body, and the distal end surface of the foot bar 170d faces the inside of the vehicle body when the foot bar 170d is seen from the lateral side of the two-wheeled motor vehicle 100. As a result, its outer appearance can be improved. Moreover, the distal portion of the foot bar 170d does not tend to come into contact with the ground, even when the vehicle body is inclined. As a result, the main stand turn can be easily performed.

More specifically, in the main stand turn, when only the metal plate 170f provided on the distal portion of the support leg 170b is in contact with the ground by inclining the vehicle body whereas the metal plate 170h is separated from the ground, the entire vehicle body is supported by only the metal plate 170f. In this situation, by further increasing the inclination of the vehicle body, the bent portion 170m of the foot bar 170d first comes into contact with the ground as shown in FIGs. 9 and 12. At this time, the distal portion 170e is restrained from touching the ground compared to the structure in which the distal portion extends to the outside of the vehicle body, because in this embodiment, the distal portion 170e extends to the inner side of the vehicle body.

As shown in FIG. 11, in the two-wheeled motor vehicle 100, the metal plate 170f at the distal end of the support leg 170b is positioned further inward of the vehicle body by the distance L1 than the outer lateral side surface of the rear arm 160 when the main stand 170 is disposed in the closed-posture. On the other hand, the foot bar 170d is arranged to extend outward from the vehicle body from the vicinity of the metal plate 170f beyond the outer lateral side surface of the rear arm 160 when the support leg 170b is placed in the closed-posture. For this reason, the foot bar 170d of the two-wheeled motor vehicle 100 is required to be relatively long.

Moreover, as shown in FIG. 11, the pivot of the paired right and left support legs 170b and 170i is positioned lower by the distance L2 than the lower surface of the second support pipe 130 which defines the lowest surface of the vehicle frame. Therefore, the foot bar 170d is required to extend from the height of the pivot to a height where riders can easily place their feet. Also for this reason, the foot bar 170d is required to be long.

Moreover, as shown in FIG. 9, the footrest 180 is positioned further rearward of the vehicle body than the vertically-extending portion 125 of the main frame 124 and the side plate 150L, and the pivot of the main stand 170 is positioned further forward than the footrest 180. In such a structure, for the purpose of securing a distance between the foot bar 170d and the footrest 180, the proximal end of the foot bar 170d is required to be positioned closer to the distal end of the support leg 170b. For the same purpose, the foot bar 170d is required to extend in a direction substantially perpendicular to the extending direction of the support leg 170b.

These configurations in the two-wheeled motor vehicle 100 invite an inconvenience that the foot bar 170d tends to come in contact with the ground at the time of the main stand turn. However, in the present embodiment, because the distal portion 170e of the foot bar 170 is bent inward, such an inconvenience can be prevented.

Moreover, in the two-wheeled motor vehicle 100, the paired support legs 170b and 170i are positioned lower than the exhaust chamber 171 in a side view of the vehicle body when the paired support legs 170b and 170i are arranged to extend in the fore-and-aft direction. With this structure, the exhaust chamber 171 can be protected by the support legs 170b and 170i.

Moreover, in the two-wheeled motor vehicle 100, the main stand 170 includes the foot bar 170d provided on the distal portion of one support leg 170b, and when the paired support legs 170b and 170i are arranged to extend in the fore-and-aft direction, the foot bar 170d is disposed to extend upward and is positioned between the rear surface 171e of the exhaust chamber 171 and the rear wheel 104 in a side view of the vehicle body. With this structure, the rear surface 171e of the exhaust chamber 171 can be protected by the foot bar 170d.

Moreover, the distal portion 170e of the foot bar 170d is bent toward the center in the vehicle width direction. With this structure, the rear surface 171e of the exhaust chamber 171 can be protected by the distal portion 170e.

Moreover, the two-wheeled motor vehicle 100 includes the footrest 180 on which the riders place their feet during riding, and the footrest bracket portion 150b for supporting the footrest 180. Furthermore, the footrest 180 and the footrest bracket portion 150b are disposed on the lateral side of the exhaust chamber 171. With this structure, the exhaust chamber 171 can be protected by the footrest 180 and the footrest bracket portion 150b.

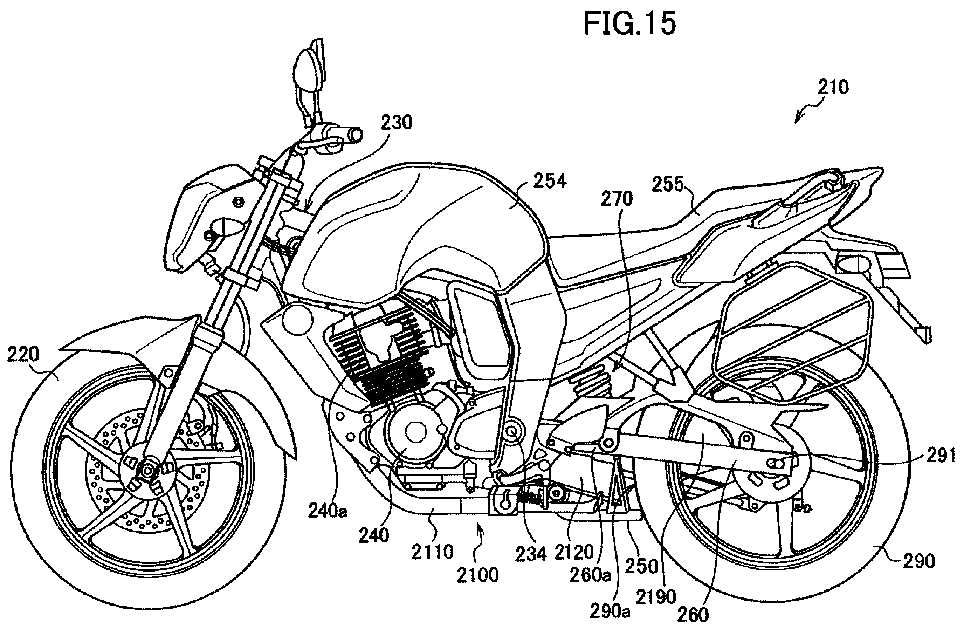

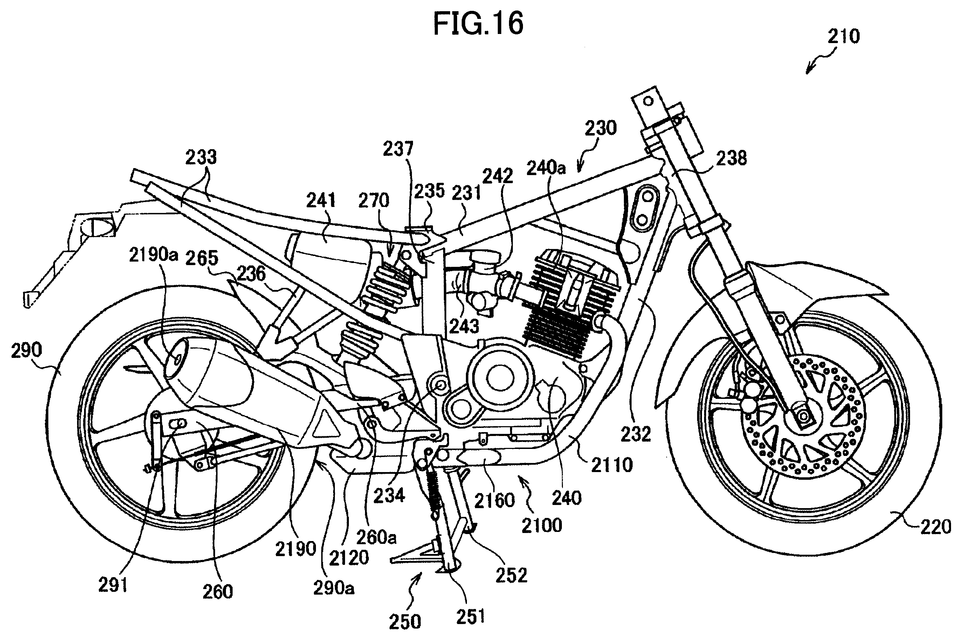

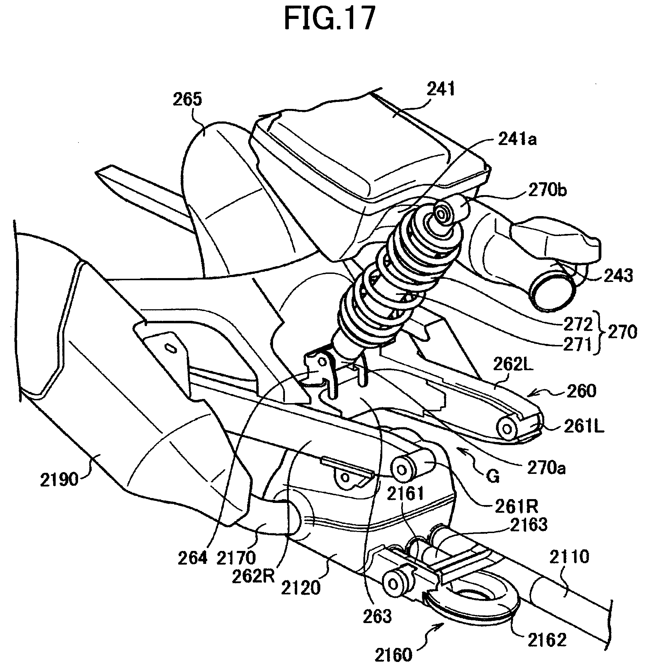

Next, a third embodiment according to the present invention will be described with reference to the drawings. FIG. 15 is a left side view of a two-wheeled motor vehicle 210 according to the present embodiment. FIG. 16 is a right side view of the two-wheeled motor vehicle 210 in a state where a vehicle body cover etc. is removed. FIG. 17 is a perspective view showing the configuration of a rear arm 260 and a cushion unit 270 included in the two-wheeled motor vehicle 210.

As shown in FIG. 15, the two-wheeled motor vehicle 210 includes a front wheel 220 and a rear wheel 290. The two-wheeled motor vehicle 210 drives the rear wheel 290 with the driving force generated by an engine 240. A fuel tank 254 for storing fuel is disposed above the engine 240. A seat 255 for riders to sit on is disposed at the rear of the fuel tank 254.

The engine 240 is a single-cylinder four-cycle engine. The engine 240 is an air-cooled engine with a small displacement. The engine 240 is mounted to a vehicle body frame 230 constituting a framework of the two-wheeled motor vehicle 210.

A rear arm (swing arm) 260 arranged to extend in the fore-and-aft direction is disposed at the rear of the engine 240. The rear wheel 290 is supported by the rear arm 260, while being allowed to move substantially in the vertical direction. The rear arm 260 includes paired right and left arm portions 262L and 262R supporting the axle 291 of the rear wheel 290 while allowing the axle 291 to rotate (refer to FIG. 17), and the arm portions 262L and 262R are spaced apart from each other in the vehicle width direction. The vehicle body frame 230 includes a pivot portion 234 supporting the rear arm 260 while allowing it to swing.

A cushion unit 270 is connected to a front portion 260a of the rear arm 260. The cushion unit 270 absorbs shock received by the rear wheel 290.

An exhaust device unit 2100 is connected to the engine 240. The exhaust device unit 2100 includes an exhaust pipe 2110 and a muffler 2190. Moreover, the exhaust device unit 2100 includes an exhaust chamber 2120 defining the exhaust device that expands exhaust gas flowing from the exhaust pipe 2110 in its inside. The exhaust chamber 2120 is connected to the engine 240. More specifically, the exhaust chamber 2120 is connected to a cylinder head 240a of the engine 240 through the exhaust pipe 2110.

As shown in FIG. 16, the vehicle frame 230 includes a main frame 231, a down tube 232, a seat rail 233 and a vertically-extending portion 237 (center frame (vertical frame portion)). The main frame 231 extends rearward from the head pipe 238. The down tube 232 extends obliquely downward and rearward from the head pipe 238. The seat rail 233 is connected to the main frame 231 through a bracket 235. A stay 236 that supports the muffler 2190 is connected to the seat rail 233. The vertically-extending portion 237 extends in the vertical direction of the two-wheeled motor vehicle 210, while being located at the rear of the engine 240, more specifically, in a middle portion of the two-wheeled motor vehicle 210. The pivot portion 234 is formed on the vertically-extending portion 237. That is, the vertically-extending portion 237 supports the rear arm 260 while allowing it to swing. In this regard, one or more vertically-extending portion 237 may be provided.

A main stand 250 to support the vehicle body placed in a state where the rear wheel 290 is separated from the ground is disposed below the vertically-extending portion 237. The main stand 250 includes paired right and left support legs 251 and 252. The support legs 251 and 252 are capable of pivoting in the vertical direction around a pivot supported by the vertically-extending portion 237. The configuration of the main stand 250 is similar to that of the main stand 170 installed to the above-described two-wheeled motor vehicle 100, and so the detailed description thereof is omitted.

An upper end 270b of the cushion unit 270 is directly connected to the bracket 235 (refer to FIG. 17). A lower end 270a of the cushion unit 270 is directly connected to the rear arm 260.

An air cleaner 241 for purifying air to be supplied to the engine 240 is disposed between the right and left seat rails 233. The air cleaner 241 is disposed at the rear of the upper end 270b of the cushion unit 270. The air cleaner 241 communicates with the cylinder head 240a through an air intake duct 243. A carburetor 242 for ejecting fuel is provided to the air intake duct 243. Air from the air cleaner 241 is mixed with fuel by the carburetor 242 and sucked in by the engine 240.

The exhaust chamber 2120 communicates with the exhaust pipe 2110. As shown in FIG. 17, the muffler 2190 communicates with the exhaust chamber 2120 through a connecting pipe 2170. That is, the exhaust chamber 2120 is provided between the engine 240 and the muffler 2190.

The exhaust chamber 2120 is disposed below the rear arm 260. Also in this embodiment, in a state where the support legs 251 and 252 of the main stand 250 are arranged to extend in the fore-and-aft direction of the rear arm 260, the exhaust chamber 2120 is positioned between the main stand 250 and the rear arm 260 in a side view of the vehicle body. The positional relationship between the exhaust chamber 2120 and the main stand 250 is similar to that between the exhaust chamber 171 and the main stand 170 installed to the two-wheeled motor vehicle 100, and so the detailed description thereof is omitted.

The exhaust pipe 2110 includes a return pipe 2160 that communicates with a lower portion of the exhaust chamber 2120 and is used for returning exhaust gas to the exhaust chamber 2120. The return pipe 2160 extends forward from a front surface of the exhaust chamber 2120 and then passes below the vertically-extending portion 237 to below a rear portion of the engine 240.

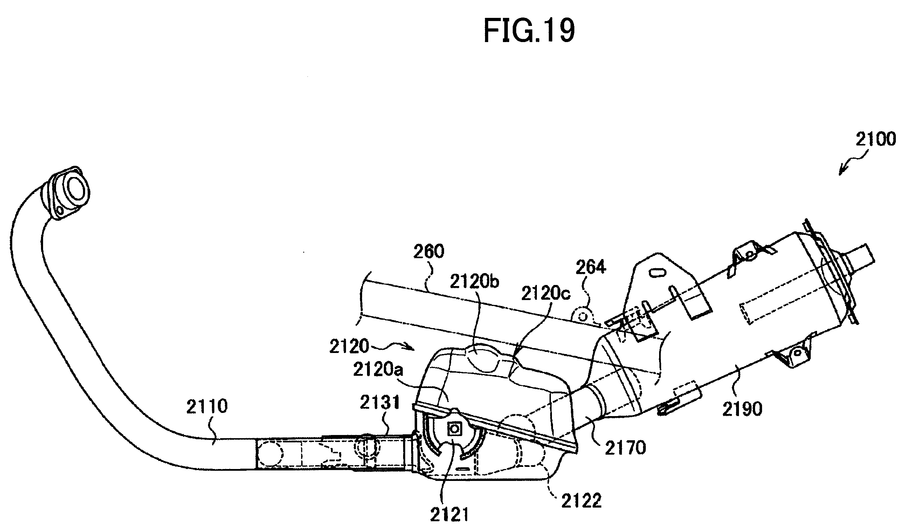

The exhaust chamber 2120 serves as a box-like expansion chamber (refer to FIG. 19), and exhaust gas discharged through the exhaust pipe 2110 from the engine 240 expands in the exhaust chamber 2120. In the embodiment described herein, the exhaust pipe 2110 includes a communication portion 2122 housed in the exhaust chamber 2120. Moreover, as described above, the exhaust pipe 2110 includes the return pipe 2160. The return pipe 2160 is connected downstream of the communication portion 2122 and disposed out of the exhaust chamber 2120. Because of this, exhaust gas flowing through the exhaust pipe 2110 passes once through the exhaust chamber 2120 to the outside of the exhaust chamber 2120, and after that the exhaust gas flows into the exhaust chamber 2120 to be released inside the exhaust chamber 2120.

The muffler 2190 is disposed to the right of the rear wheel 290 and positioned on a rear end portion of the exhaust device unit 2100. The exhaust gas flowing from the exhaust chamber 2120 into the muffler 2190 through the connecting pipe 2170 is released to the outside from an exhaust outlet 2190a positioned at the rear end of the muffler 2190.

The exhaust chamber 2120 and the muffler 2190 reduce exhaust noise generated by the engine 240. That is, the exhaust gas expands in both the exhaust chamber 2120 and the muffler 2190. Similarly to the two-wheeled motor vehicle 100, the two-wheeled motor vehicle 210 includes the exhaust chamber 2120 in addition to the muffler 2190, as just described above, so that the muffler 2190 is downsized compared to the case where the exhaust chamber 2120 is not provided. That is, the entire length of the exhaust device unit 2100 becomes smaller compared to the case where the exhaust chamber 2120 is not provided.

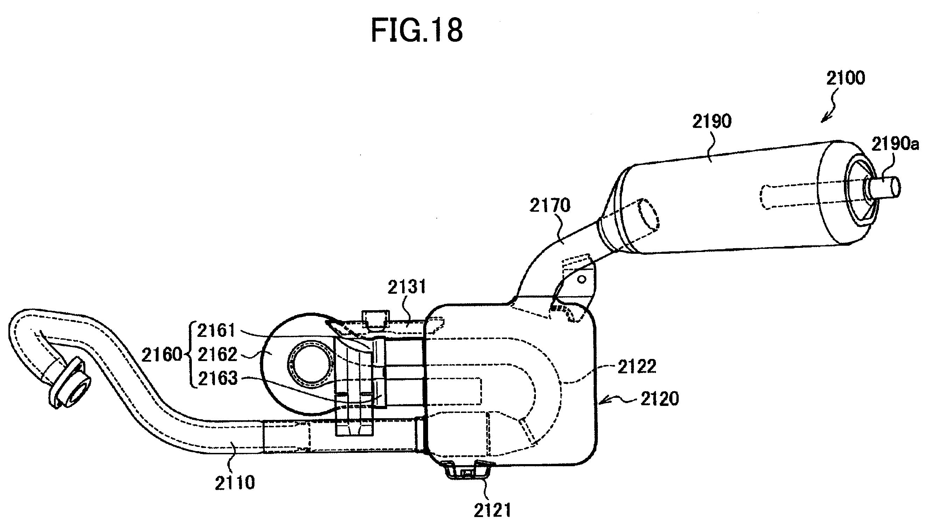

The rear arm 260, the cushion unit 270, and the exhaust device unit 2100 will be described with reference to FIGs. 17 through 19. FIG. 18 is a plane view of the exhaust device unit 2100. FIG. 19 is a side view of the exhaust deice unit 2100.

As shown in FIG. 17, in addition to the arm portions 262L and 262R, the rear arm 260 includes supported portions 261L and 261R positioned at the front ends of the arm portions 262L and 262R, and a bridge portion 263 provided on the front portion 260a of the rear arm 260 and spaced rearward apart from the vertically-extending portion 237. Moreover, a rear fender 265 is attached to the rear arm 260. The rear fender 265 covers a part of the rear wheel 290. In this embodiment, the rear fender 265 is disposed on an upper surface of the bridge portion 263 and on upper surfaces of rear portions of the arm portions 262L and 262R, and diagonally covers the rear wheel 290 from the front and above.

The supported portions 261L and 261R are supported by the vehicle body frame 230. That is, the pivot (not shown) is inserted into the supported portions 261L and 261R and the pivot portion 234 formed on the vertically-extending portion 237, thereby rotatably supporting the supported portions 261L and 261R. The arm portions 262L and 262R extend rearward from the supported portions 261L and 261R, and the rear ends of the arm portions 262L and 262R support the axle 291 of the rear wheel 290 while allowing the axle 291 to rotate. This allows the rear arm 260 to swing vertically around the pivot together with the rear wheel 290.

The bridge portion 263 is formed to extend in the vehicle width direction, and connects the right and left arm portions 262L and 262R together. As described above, the bridge portion 263 is spaced rearward from the vertically-extending portion 237. Therefore, a space G is formed inside a front portion of the arm portions 262L and 262R, the supported portions 261L and 261R, and the bridge portion 263, while being surrounded by them. A bracket 264 projecting upward from the bridge portion 263 is mounted on the bridge portion 263. The lower end 270a of the cushion unit 270 is connected to the bracket 264, and thus the lower end 270a of the cushion unit 270 is directly connected to the rear arm 260, not through a link mechanism.

The exhaust chamber 2120 is disposed further rearward than the vertically-extending portion 237. More specifically, the exhaust chamber 2120 is disposed further rearward than the supported portions 261L and 261R as well as further forward than the front end 290a of the rear wheel 290, and positioned below the space G. In the two-wheeled motor vehicle 210, the exhaust chamber 2120 is positioned in the middle of the two-wheeled motor vehicle 210 in the fore-and-aft direction, as well as at the lowest part of the two-wheeled motor vehicle 210.

The cushion unit 270 includes a damper 271 and a coil spring 272. The damper 271 reciprocates to reduce shock received by the rear wheel 290. The damper 271 is formed to be cylindrical. The longitudinal direction of the damper 271 is disposed along the vertical direction of the two-wheeled motor vehicle 210. More specifically, the damper 271 is obliquely arranged above the space G. The coil spring 272 is disposed on an outer circumference of the damper 271.

A recessed portion 241a which is curved along an outer circumferential shape of the cushion unit 270 is formed at a front end (front surface) of the air cleaner 241. The air intake duct 243 extends forward from a portion of the front surface of the air cleaner 241 positioned to the left of the recessed portion 241a.

As shown in FIG. 18, the return pipe 2160 includes a first pipe portion 2161 and a second pipe portion 2163. The first pipe portion 2161 extends forward from a lower portion of a front surface of the exhaust chamber 2120. The second pipe portion 2163 is connected to the first pipe portion 2161 and communicates with the exhaust chamber 2120. More specifically, a folded pipe portion 2162 that reverses the extending direction of the first pipe portion 2161 is provided on a distal portion of the first pipe portion 2161. The second pipe portion 2163 extends rearward from the folded pipe portion 2162, and a distal portion of the second pipe portion 2163 is open inside the exhaust chamber 2120. As described above, the communication portion 2122 is housed in the exhaust chamber 2120. The upstream side of the exhaust pipe 2110 and the first pipe portion 2161 communicate with each other through the communication portion 2122. Moreover, in the exhaust chamber 2120, the first pipe portion 2161, second pipe portion 2163, and the communication portion 2122 are positioned at the same height, which allows the exhaust gas to easily expand in the exhaust chamber 2120. In this embodiment, the first pipe portion 2161, second pipe portion 2163, and the communication portion 2122 are positioned on a lower portion in the exhaust chamber 2120, and a space for expanding the exhaust gas is formed in an upper portion of the exhaust chamber 2120.

As shown in FIGs. 17 and 18, a bracket 2131 is provided on the first pipe portion 2161. The bracket 2131 bridges between the outer circumferential surface of the first pipe portion 2161 and the front surface of the exhaust chamber 2120. Moreover, a bracket 2121 formed to laterally swell from the side surface of the exhaust chamber 2120 is provided on the side surface of the exhaust chamber 2120 (refer to FIG. 18). The brackets 2131 and 2121 are attached to the vehicle frame 230. By doing this, the exhaust chamber 2120 and the return pipe 2160 are supported by the vehicle frame 230.

As shown in FIG. 19, a protruding portion 2120b protruding upward is provided on a front portion 2120a of the exhaust chamber 2120. The protruding portion 2120b is positioned below the space G (refer to FIG. 17). The exhaust chamber 2120 includes an upper surface portion 2120c positioned below the rear arm 260, more specifically, below the bridge portion 263. The upper surface portion 2120c is inclined downward while extending rearward of the two-wheeled motor vehicle 210, and disposed along the rear arm 260.

In addition to the exhaust chamber 2120, the two-wheeled motor vehicle 210 as described above includes the muffler 2190 that expands exhaust gas flowing from the exhaust chamber 2120 and then discharges it to the outside Because of this, the exhaust noise can be easily reduced compared to the case where only the exhaust chamber 2120 is provided.

Moreover, according to the two-wheeled motor vehicle 210 described above, the following advantages can be obtained compared to the conventional two-wheeled motor vehicle. In some conventional two-wheeled motor vehicles having an exhaust chamber between an engine and a muffler, the exhaust chamber is arranged ahead of an oil pan located below the engine, and the muffler is disposed behind the oil pan, for the purpose of securing the minimum ground clearance of the vehicle body. However, in this kind of two-wheeled motor vehicle, because the exhaust chamber is disposed ahead of the oil pan, a problem is caused in that the exhaust chamber contacts with projections etc. on the ground when the front wheel rides over the projections, and could be easily damaged.

Regarding this point, the two-wheeled motor vehicle 210 includes the rear arm 260 that supports the rear wheel 290 to allow it to bounce in substantially the vertical direction, the cushion unit 270 connected to the rear arm 260 for absorbing shock received by the rear wheel 290, the engine 240 that generates the driving force of the rear wheel 290, and the exhaust chamber 2120 provided midway between the engine 240 and the muffler 2190. Moreover, the lower end 270a of the cushion unit 270 is directly connected to the rear arm 260, not through the link mechanism. This prevents the cushion unit 270 from becoming positioned lower than the rear arm 260 when the rear arm 260 swings. Because of this, the exhaust chamber 2120 can be disposed close to the rear arm 260 without the rear arm 260 and the exhaust chamber 2120 hitting each other. As a result, the damage of the exhaust chamber 2120 due to the contact with projections etc. on the ground can be reduced and the minimum ground clearance can be secured.

Moreover, the exhaust chamber 2120 is disposed further rearward than the supported portions 261L and 261R as well as further forward than the front end 290a of the rear wheel 290. The range of movement of the rear arm 260 in the substantially vertical direction becomes smaller toward the supported portions 261L and 261R. Accordingly, the structure where the exhaust chamber 2120 is disposed further rearward than the supported portions 261L and 261R, as well as further forward than the front end 290a of the rear wheel 290, allows the exhaust chamber 2120 to be disposed near the supported portions 261L and 261R. Because of this, the exhaust chamber 2120 can be disposed near the rear arm 260 without the rear arm 260 and the exhaust chamber 2120 hitting each other.

Moreover, the exhaust chamber 2120, which is a heavy device, is disposed on a middle portion of the two-wheeled motor vehicle 210 in the fore-and-aft direction, as well as the lowest portion of the two-wheeled motor vehicle 210. With this arrangement, the center of gravity of the two-wheeled motor vehicle 210 can be lowered, and the running stability and operability can be improved.

Moreover, in the two-wheeled motor vehicle 210, the upper surface portion 2120c of the exhaust chamber 2120 is inclined downward while going to the rear of the two-wheeled motor vehicle 210. This prevents the rear arm 260 and the exhaust chamber 2120 hitting reach other. As a result, the exhaust chamber 2120 can be disposed near the rear arm 260 and the capacity (volume) of the exhaust chamber 2120 can be secured.

Moreover, the upper surface portion 2120c is positioned below the bridge portion 263. The bridge portion 263 is disposed along the vehicle width direction between the arm portions 262L and 262R. Consequently, the upper surface portion 2120c and the bridge portion 263 can be easily prevented from hitting each other by inclining the upper surface portion 2120c downward.

Moreover, in the two-wheeled motor vehicle 210, the rear arm 260 includes the paired arm portions 262L and 262R. The paired arm portions 262L and 262R are connected to the supported portions 261L and 261R and support the axle 291 of the rear wheel 290 while allowing the axle 291 to rotate. The rear arm 260 also includes the bridge portion 263 connecting the paired arm portions 262L and 262R together. Moreover, the lower end 270a of the cushion unit 270 is connected to the bridge portion 263. With this arrangement, the cushion unit 270, which is heavy device, can be disposed on a center portion of the vehicle body and the stability of the two-wheeled motor vehicle 210 when running can be improved. Moreover, shock received by the rear wheel 290 can be absorbed by only the single cushion unit 270. As a result, the two-wheeled motor vehicle 210 can be prevented from being enlarged, and the minimum ground clearance can be secured as described above.

Moreover, in the two-wheeled motor vehicle 210, the space G is formed inside the supported portions 261L and 261R and the bridge portion 263, and the exhaust chamber 2120 is disposed below the space G. Consequently, even when the rear arm 260 swings downward, it is possible to avoid the rear arm 260 and the exhaust chamber 2120 (more specifically, the protruding portion 2120b) hitting each other. As a result, the exhaust chamber 2120 can be disposed near the rear arm 260.

Moreover, in the two-wheeled motor vehicle 210, the upper end 270b of the cushion unit 270 is directly connected to the vehicle frame 230, not through the link mechanism. Consequently, a space for the link mechanism is not necessary, so that the two-wheeled motor vehicle 210 can be prevented from being enlarged, and the minimum ground clearance can be secured as described above.

Moreover, in the two-wheeled motor vehicle 210, the air cleaner 241 for purifying air to be supplied to the engine 240 is disposed at the rear of the upper end 270b of the cushion unit 270. Because the link mechanism is unnecessary, the space for disposing the air cleaner 241 can be secured as just described above, and at the same time, the enlargement of the two-wheeled motor vehicle 210 is suppressed.

Moreover, in the two-wheeled motor vehicle 210, the cushion unit 270 includes the cylindrical damper 271 that reciprocates to reduce shock received by the rear wheel 290. The longitudinal direction of the damper 271 is disposed along the vertical direction of the two-wheeled motor vehicle 210. Consequently, the minimum ground clearance can be secured while using the cushion unit 270 having a general configuration.

Moreover, the two-wheeled motor vehicle 210 includes the return pipe 2160 disposed out of the exhaust chamber 2120, so that an exhaust route having a necessary length can be easily secured. Moreover, compared with the case where the exhaust pipe having a length corresponding to the return pipe 2160 is disposed inside the exhaust chamber 2120, the substantive capacity of the exhaust chamber 2120 can be increased. As a result, the performance of reducing the exhaust noise can be enhanced.

In the two-wheeled motor vehicle 210 as described above, the exhaust chamber 2120 is positioned further rearward than the supported portions 261L and 261R, as well as further forward than a connection portion (that is, the bracket 264 and the lower end 270a). However, a part of the exhaust chamber 2120 may be disposed further rearward than the connection portion (that is, the bracket 264 and the lower end 270a).

Moreover, in the two-wheeled motor vehicle 210, the upper end 270b of the cushion unit 270 is directly connected to the vehicle frame 230, not through the link mechanism. However, the upper end 270b of the cushion unit 270 may be connected to the vehicle frame 230 through the link mechanism.

Moreover, in the two-wheeled motor vehicle 210, the exhaust chamber 2120 is disposed below the space G. However, the exhaust chamber is not necessarily disposed below the space G.

Moreover, in the two-wheeled motor vehicle 210, the air cleaner 241 is disposed at the rear of the upper end 270b of the cushion unit 270. However, the air cleaner 241 may be disposed ahead of, or on the lateral side of, the upper end 270b of the cushion unit 270.

Moreover, in the two-wheeled motor vehicle 210, the cushion unit 270 includes the cylindrical damper 271 that reciprocates to reduce shock received by the rear wheel 290, and the longitudinal direction of the damper 271 is disposed along the vertical direction of the two-wheeled motor vehicle 210. That is, the cushion unit 270 having a general configuration is used. However, a cushion unit having a special configuration may be used.

Moreover, in the two-wheeled motor vehicle 210, almost the entire portion of the upper surface portion 2120c is inclined downward. However, the front portion of the upper surface portion 2120c may have no inclination. Alternatively, the front portion of the upper surface portion 2120c may be inclined downward while extending forward.

Moreover, the right and left portions of the upper surface portion 2120c may be formed to be lower than its middle portion. More specifically, a portion of the upper surface portion 2120c positioned below the arm portion 262L, and a portion of the upper surface portion 2120c positioned below the arm portion 262R, may be formed to be lower than the middle portion of the upper surface portion 2120c. As a result, the upper surface portion 2120c and the rear arm 260 can be reliably prevented from hitting each other. In this structure, as long as the capacity (volume) of the exhaust chamber 2120 is secured, the exhaust chamber 2120 is not necessarily extended in the width direction to a position where the exhaust chamber 2120 is overlapped with the arm portions 262L and 262R in the vertical direction.

As described above, the content of the present invention is disclosed through embodiments of the present invention. However, it should not be construed that the statements and drawings which constitute a part of this disclosure limit the present invention. It is obvious that the present invention includes various embodiments not disclosed herein.

## Claims

1. A two-wheeled motor vehicle comprising:
an engine (21);
a vehicle frame (3) having a vertical frame portion (4, 5) extending vertically at the rear of the engine (21);
a rear wheel (8) disposed behind the vertical frame portion (4, 5);
a rear arm (6, 7) arranged to extend in a fore-and-aft direction at the rear of the vertical frame portion (4, 5) and supported by the vertical frame portion (4, 5) so as to swing together with the rear wheel (8);
a main stand (26) that extends in the fore-and-aft direction below the rear arm (6, 7), includes paired support legs (27, 28) spaced apart from each other in a vehicle width direction, and supports the vehicle body when the paired support legs (27, 28) are pivoted to a posture of standing on the ground from a posture of being arranged to extend in the fore-and-aft direction; and
an exhaust device (24) that is connected to an exhaust pipe (23) extending from the engine (21), and configured to expand exhaust gas, which flows from the exhaust pipe (23), inside the exhaust device (24),
wherein at least a rear portion (24e) of the exhaust device (24) is positioned lower than the rear arm (6, 7) and between the rear wheel (8) and the vertical frame portion (4, 5), and, in a plane view of the exhaust device (24) and the main stand (26), at least the rear portion (24e) of the exhaust device (24) is positioned between the paired support legs (27, 28) in the posture of being arranged to extend in the fore-and-aft direction,
**characterized in that**
the exhaust device (24) includes an exhaust outlet (24b) for discharging the exhaust gas to the outside positioned higher than the support legs (27, 28) in the posture of being arranged to extend in the fore-and-aft direction, and disposed in the rear portion (24e) of the exhaust device (24), as well as between the rear arm (6, 7) and the main stand (26) in a state of running

2. A two-wheeled motor vehicle comprising:
an engine (102; 240);
a vehicle frame (124; 230) having a vertical frame portion (125; 237) extending vertically at the rear of the engine (102; 240);
a rear wheel (104; 290) disposed behind the vertical frame portion (125; 237);
a rear arm (160; 260) arranged to extend in a fore-and-aft direction at the rear of the vertical frame portion (125; 237) and supported by the vertical frame portion (125; 237) so as to swing together with the rear wheel (104; 290);
a main stand (170; 250) that extends in the fore-and-aft direction below the rear arm (160; 260), includes paired support legs (170b, 170i; 251, 252) spaced apart from each other in a vehicle width direction, and supports the vehicle body when the paired support legs (170b, 170i; 251, 252) are pivoted to a posture of standing on the ground from a posture of being arranged to extend in the fore-and-aft direction;
an exhaust device (171; 2120) that is connected to an exhaust pipe (173; 2110) extending from the engine (102; 240), and configured to expand exhaust gas, which flows from the exhaust pipe (173; 2110), inside the exhaust device (171; 2120); and
a muffler (179; 2190) that is configured to expand exhaust gas, which flows from the exhaust device (171; 2120), inside the muffler (179; 2190), and that is configured to release the exhaust gas to the outside,
wherein at least a rear portion (171e) of the exhaust device (171; 2120) is positioned lower than the rear arm (160; 260) and between the rear wheel (104; 290) and the vertical frame portion (125; 237), and, in a plane view of the exhaust device (171; 2120) and the main stand (170; 250), at least the rear portion (171e) of the exhaust device (171; 2120) is positioned between the paired support legs (170b, 170i; 251, 252) in the posture of being arranged to extend in the fore-and-aft direction, and
wherein the muffler (179) is connected to the exhaust device (171) through a connecting pipe (178),
**characterized in that**
the connecting pipe (178) extends obliquely rearward toward the outer side of the vehicle body from a lateral side surface (171j) of the exhaust device (171), and is connected to the muffler (179).

3. The two-wheeled motor vehicle according to Claim 1, wherein
the exhaust device (24) is arranged to extend from the rear portion (24e) forward below the vertical frame portion (4, 5), in a side view of the vehicle body.

4. The two-wheeled motor vehicle according to Claim 1 or 2, wherein
the main stand (26; 170; 250) includes a connecting portion (29; 170g) for connecting the paired support legs (27, 28; 170b, 170i; 251, 252) together, and
the connecting portion (29; 170g) is arranged to extend in the vehicle width direction at the rear of the exhaust device (24; 171; 2120) and below the exhaust outlet (24b) or the connecting pipe (178), in a state where the paired support legs (27, 28; 170b, 170i; 251, 252) are arranged to extend in the fore-and-aft direction.

5. The two-wheeled motor vehicle according to Claim 4, wherein
the connecting portion (29; 107g) is positioned between a rear end portion of the exhaust device (24; 171; 2120) and the rear wheel (8; 104; 290), in the state where the paired support legs (27, 28; 170b, 170i; 251, 252) are arranged to extend in the fore-and-aft direction.

6. The two-wheeled motor vehicle according to Claim 4 or 5, wherein
at least the rear portion (24e; 171e) of the exhaust device (24; 171; 2120) is surrounded by the paired support legs (27, 28; 170b, 170i; 251, 252) and the connecting portion, in the state where the paired support legs (27, 28; 170b, 170i; 251, 252) are arranged to extend in the fore-and-aft direction.

7. The two-wheeled motor vehicle according to Claim 4, wherein
the connecting portion is disposed below a front end of the rear wheel (8; 104; 290), in the state where the paired support legs (27, 28; 170b, 170i; 251, 252) are arranged to extend in the fore-and-aft direction.

8. The two-wheeled motor vehicle according to Claim 1,
wherein the main stand (26), in the posture of being arranged to extend in the fore-and-aft direction, is positioned higher than a lower surface of the exhaust device (24).

9. The two-wheeled motor vehicle according to Claim 1 or 2, wherein
a center of the pivoting of the main stand (26; 170; 250) is positioned higher than the lowest portion of the exhaust device (24; 171; 2120).

10. The two-wheeled motor vehicle according to Claim 2, wherein
in a side view of the vehicle body, the paired support legs (170b, 170i; 251, 252) are positioned lower than the exhaust device (171; 2120), in a state where the paired support legs (170b, 170i; 251, 252) are arranged to extend in the fore-and-aft direction.

11. The two-wheeled motor vehicle according to Claim 2, wherein
the exhaust device (171; 2120) is disposed further rearward than the vertical frame portion (125; 237).

12. The two-wheeled motor vehicle according to Claim 2, further comprising a cushion unit (270) connected to the rear arm (160; 260) for absorbing shock received by the rear wheel (104; 290), wherein
a lower end of the cushion unit (270) is directly connected to the rear arm (160; 260), not through a link mechanism.

13. The two-wheeled motor vehicle according to Claim 12, wherein an upper end of the cushion unit (270) is directly connected to the vehicle frame (124; 230), not through the link mechanism.

14. The two-wheeled motor vehicle according to Claim 12, further comprising an air cleaner (241) for purifying air to be supplied to the engine (102; 240), wherein
the air cleaner (241) is disposed behind the upper end of the cushion unit (270).

## Patentansprüche

1. Ein zweirädriges Kraftfahrzeug, das folgende Merkmale aufweist:
einen Motor (21);
einen Fahrzeugrahmen (3), der einen vertikalen Rahmenabschnitt (4, 5) aufweist, der sich vertikal an der Rückseite des Motors (21) erstreckt;
ein Hinterrad (8), das hinter dem vertikalen Rahmenabschnitt (4, 5) angebracht ist;
einen hinteren Arm (6, 7), der angeordnet ist, sich in einer Vor-Zurück-Richtung an der Rückseite des vertikalen Rahmenabschnitts (4, 5) zu erstrecken, und der durch den vertikalen Rahmenabschnitt (4, 5) gestützt ist, um zusammen mit dem Hinterrad (8) zu schwingen;
einen Hauptständer (26), der sich unterhalb des hinteren Arms (6, 7) in die Vor-Zurück-Richtung erstreckt, paarige Abstellstützen (27, 28), die voneinander in einer Fahrzeugbreitenrichtung beabstandet sind, umfasst und den Fahrzeugaufbau stützt, wenn die paarigen Abstellstützen (27, 28) in eine Stellung geschwenkt sind, bei der dieselben auf dem Boden stehen, aus einer Stellung heraus, bei der dieselben angeordnet sind, sich in die Vor-Zurück-Richtung zu erstrecken; und
eine Abgasvorrichtung (24), die mit einem Abgasrohr (23) verbunden ist, das sich von dem Motor (21) erstreckt, und die ausgebildet ist, aus dem Abgasrohr (23) strömendes Abgas innerhalb der Abgasvorrichtung (24) zu expandieren,
wobei zumindest ein hinterer Abschnitt (24e) der Abgasvorrichtung (24) tiefer als der hintere Arm (6, 7) und zwischen dem Hinterrad (8) und dem vertikalen Rahmenabschnitt (4, 5) positioniert ist und zumindest der hintere Abschnitt (24e) der Abgasvorrichtung (24) in einer Draufsicht der Abgasvorrichtung (24) und des Hauptständers (26) zwischen den paarigen Abstellstützen (27, 28) in der Stellung positioniert ist, bei der dieselben angeordnet sind, sich in die Vor-Zurück-Richtung zu erstrecken,
**dadurch gekennzeichnet, dass**
die Abgasvorrichtung (24) einen Abgasauslass (24b) zum Ablassen des Abgases nach außen umfasst, der in einem Betriebszustand höher als die Abstellstützen (27, 28) in der Stellung, bei der dieselben angeordnet sind, sich in die Vor-Zurück-Richtung zu erstrecken, positioniert ist und in dem hinteren Abschnitt (24e) der Abgasvorrichtung (24) sowie zwischen dem hinteren Arm (6, 7) und dem Hauptständer (26) angeordnet ist.

2. Ein zweirädriges Kraftfahrzeug, das folgende Merkmale aufweist:
einen Motor (102; 240);
einen Fahrzeugrahmen (124; 230), der einen vertikalen Rahmenabschnitt (125; 237) aufweist, der sich vertikal an der Rückseite des Motors (102; 240) erstreckt;
ein Hinterrad (104; 290), das hinter dem vertikalen Rahmenabschnitt (125; 237) angebracht ist;
einen hinteren Arm (160; 260), der angeordnet ist, sich in einer Vor-Zurück-Richtung an der Rückseite des vertikalen Rahmenabschnitts (125; 237) zu erstrecken, und der durch den vertikalen Rahmenabschnitt (125; 237) gestützt ist, um zusammen mit dem Hinterrad (104; 290) zu schwingen;
einen Hauptständer (170; 250), der sich unterhalb des hinteren Arms (160; 260) in die Vor-Zurück-Richtung erstreckt, paarige Abstellstützen (170b, 170i; 251, 252), die voneinander in einer Fahrzeugbreitenrichtung beabstandet sind, umfasst und den Fahrzeugaufbau stützt, wenn die paarigen Abstellstützen (170b, 170i; 251, 252) in eine Stellung geschwenkt sind, bei der dieselben auf dem Boden stehen, aus einer Stellung heraus, bei der dieselben angeordnet sind, sich in die Vor-Zurück-Richtung zu erstrecken;
eine Abgasvorrichtung (171; 2120), die mit einem Abgasrohr (173; 2110) verbunden ist, das sich von dem Motor (102; 240) erstreckt, und die ausgebildet ist, aus dem Abgasrohr (173; 2110) strömendes Abgas innerhalb der Abgasvorrichtung (171; 2120) zu expandieren; und
einen Schalldämpfer (179; 2190), der ausgebildet ist, aus der Abgasvorrichtung (171; 2120) strömendes Abgas innerhalb des Schalldämpfers (179; 2190) zu expandieren, und der ausgebildet ist, das Abgas nach außen abzugeben,
wobei zumindest ein hinterer Abschnitt (171e) der Abgasvorrichtung (171; 2120) tiefer als der hintere Arm (160; 260) und zwischen dem Hinterrad (104; 290) und dem vertikalen Rahmenabschnitt (125; 237) positioniert ist und zumindest der hintere Abschnitt (171e) der Abgasvorrichtung (171; 2120) in einer Draufsicht der Abgasvorrichtung (171; 2120) und des Hauptständers (170; 250) zwischen den paarigen Abstellstützen (170b, 170i; 251, 252) in der Stellung positioniert ist, bei der dieselben angeordnet sind, sich in die Vor-Zurück-Richtung zu erstrecken, und
wobei der Schalldämpfer (179) mit der Abgasvorrichtung (171) durch ein Verbindungsrohr (178) verbunden ist,
**dadurch gekennzeichnet, dass**
das Verbindungsrohr (178) sich von einer lateralen Seitenoberfläche (171j) der Abgasvorrichtung (171) schräg nach hinten zu der äußeren Seite des Fahrzeugaufbaus erstreckt und mit dem Schalldämpfer (179) verbunden ist.

3. Das zweirädrige Kraftfahrzeug gemäß Anspruch 1, bei dem die Abgasvorrichtung (24) angeordnet ist, sich in einer Seitenansicht des Fahrzeugaufbaus von dem hinteren Abschnitt (24e) nach vorn unterhalb des vertikalen Rahmenabschnitts (4, 5) zu erstrecken.

4. Das zweirädrige Kraftfahrzeug gemäß Anspruch 1 oder 2, bei dem
der Hauptständer (26; 170; 250) einen Verbindungsabschnitt (29; 170g) zum Verbinden der paarigen Abstellstützen (27, 28; 170b, 170i; 251, 252) umfasst und
der Verbindungsabschnitt (29; 170g) in einem Zustand, bei dem die paarigen Abstellstützen (27, 28; 170b, 170i; 251, 252) angeordnet sind, sich in die Vor-Zurück-Richtung zu erstrecken, angeordnet ist, sich in der Fahrzeugbreitenrichtung an der Rückseite der Abgasvorrichtung (24; 171; 2120) und unterhalb des Abgasauslasses (24b) oder des Verbindungsrohrs (178) zu erstrecken.

5. Das zweirädrige Kraftfahrzeug gemäß Anspruch 4, bei dem in dem Zustand, bei dem die paarigen Abstellstützen (27, 28; 170b, 170i; 251, 252) angeordnet sind, sich in die Vor-Zurück-Richtung zu erstrecken, der Verbindungsabschnitt (29; 107g) zwischen einem hinteren Endabschnitt der Abgasvorrichtung (24; 171; 2120) und dem Hinterrad (8; 104; 290) positioniert ist.

6. Das zweirädrige Kraftfahrzeug gemäß Anspruch 4 oder 5, bei dem in dem Zustand, bei dem die paarigen Abstellstützen (27, 28; 170b, 170i; 251, 252) angeordnet sind, sich in die Vor-Zurück-Richtung zu erstrecken, zumindest der hintere Abschnitt (24e; 171e) der Abgasvorrichtung (24; 171; 2120) von den paarigen Abstellstützen (27, 28; 170b, 170i; 251, 252) und dem Verbindungsabschnitt umgeben ist.

7. Das zweirädrige Kraftfahrzeug gemäß Anspruch 4, bei dem in dem Zustand, bei dem die paarigen Abstellstützen (27, 28; 170b, 170i; 251, 252) angeordnet sind, sich in die Vor-Zurück-Richtung zu erstrecken, der Verbindungsabschnitt unterhalb eines vorderen Endes des Hinterrads (8; 104; 290) angebracht ist.

8. Das zweirädrige Kraftfahrzeug gemäß Anspruch 1, bei dem der Hauptständer (26) in der Stellung, bei der derselbe sich in die Vor-Zurück-Richtung erstreckt, höher als eine untere Oberfläche der Abgasvorrichtung (24) positioniert ist.

9. Das zweirädrige Kraftfahrzeug gemäß Anspruch 1 oder 2, bei dem eine Schwenkmitte des Hauptständers (26; 170; 250) höher als der unterste Abschnitt der Abgasvorrichtung (24; 171; 2120) positioniert ist.

10. Das zweirädrige Kraftfahrzeug gemäß Anspruch 2, bei dem in einem Zustand, bei dem die paarigen Abstellstützen (170b, 170i; 251, 252) angeordnet sind, sich in die Vor-Zurück-Richtung zu erstrecken, die paarigen Abstellstützen (170b, 170i; 251, 252) in einer Seitenansicht des Fahrzeugaufbaus tiefer als die Abgasvorrichtung (171; 2120) positioniert sind.

11. Das zweirädrige Kraftfahrzeug gemäß Anspruch 2, bei dem die Abgasvorrichtung (171; 2120) weiter hinten als der vertikale Rahmenabschnitt (125; 237) angeordnet ist.

12. Das zweirädrige Kraftfahrzeug gemäß Anspruch 2, das ferner eine Puffereinheit (270) aufweist, die zum Absorbieren von Stößen, die durch das Hinterrad (104; 290) aufgenommen werden, mit dem hinteren Arm (160; 260) verbunden ist, wobei
ein unteres Ende der Puffereinheit (270) direkt mit dem hinteren Arm (160; 260) verbunden ist, nicht durch einen Verbindungsmechanismus.

13. Das zweirädrige Kraftfahrzeug gemäß Anspruch 12, bei dem ein oberes Ende der Puffereinheit (270) direkt mit dem Fahrzeugrahmen (124; 230) verbunden ist, nicht durch den Verbindungsmechanismus.

14. Das zweirädrige Kraftfahrzeug gemäß Anspruch 12, das ferner einen Luftreiniger (241) zum Reinigen von Luft aufweist, die dem Motor (102; 240) zugeführt werden soll, wobei
der Luftreiniger (241) hinter dem oberen Ende der Puffereinheit (270) angebracht ist.

## Revendications

1. Véhicule à moteur à deux roues, comprenant:
un moteur (21);
un châssis de véhicule (3) présentant une partie de châssis verticale (4, 5) s'étendant verticalement à l'arrière du moteur (21);
une roue arrière (8) disposée derrière la partie de châssis verticale (4, 5);
un bras arrière (6, 7) disposé de manière à s'étendre dans une direction avant et arrière à l'arrière de la partie de châssis verticale (4, 5) et supporté par la partie de châssis verticale (4, 5) de manière à pivoter ensemble avec la roue arrière (8);
une béquille principale (26) qui s'étend dans la direction avant et arrière au-dessous du bras arrière (6, 7) comporte une paire de branches de support (27, 28) espacées l'une de l'autre dans un sens de la largeur du véhicule, et supporte la carrosserie de véhicule lorsque la paire de branches de support (27, 28) sont pivotées en une position debout sur le sol à partir d'une position disposée de manière à s'étendre dans la direction avant et arrière; et
un dispositif d'échappement (24) qui est connecté à un tuyau d'échappement (23) s'étendant à partir du moteur (21), et configuré de manière à détendre le gaz d'échappement qui circule du tuyau d'échappement (23) dans le dispositif d'échappement (24),
dans lequel au moins une partie arrière (24e) du dispositif d'échappement (24) est positionnée plus bas que le bras arrière (6, 7) et entre la roue arrière (8) et la partie de châssis verticale (4, 5), et, en vue en plan du dispositif d'échappement (24) et de la béquille principale (26), au moins la partie arrière (24e) du dispositif d'échappement (24) est positionnée entre la paire de branches de support (27, 28) dans la position disposée de manière à s'étendre dans la direction avant et arrière,
**caractérisé par le fait que**
le dispositif d'échappement (24) comporte une sortie d'échappement (24b) destinée à évacuer les gaz d'échappement vers l'extérieur positionnée plus haut que les branches de support (27, 28) dans la position disposée de manière à s'étendre dans la direction avant et arrière, et disposée dans la partie arrière (24e) du dispositif d'échappement (24), ainsi qu'entre le bras arrière (6, 7) et la béquille principale (26) dans un état de roulement.

2. Véhicule à moteur à deux roues, comprenant:
un moteur (102; 240);
un châssis de véhicule (124; 230) présentant une partie de châssis verticale (125; 237) s'étendant verticalement à l'arrière du moteur (102; 240);
une roue arrière (104; 290) disposée derrière la partie de châssis verticale (125; 237);
un bras arrière (160; 260) disposé de manière à s'étendre dans une direction avant et arrière à l'arrière de la partie de châssis verticale (125; 237) et supporté par la partie de châssis verticale (125; 237) de manière à pivoter ensemble avec la roue arrière (104; 290);
une béquille principale (170; 250) qui s'étend dans la direction avant et arrière au-dessous du bras arrière (160; 260), comporte une paire de branches de support (170b, 170i; 251, 252) espacées l'une de l'autre dans un sens de la largeur du véhicule, et supporte la carrosserie du véhicule lorsque la paire de branches de support (170b, 170i; 251, 252) sont pivotées en une position debout sur le sol à partir d'une position disposée de manière à s'étendre dans la direction avant et arrière;
un dispositif d'échappement (171; 2120) qui est connecté à un tuyau d'échappement (173; 2110) s'étendant à partir du moteur (102; 240), et configuré de manière à détendre le gaz d'échappement qui circule du tuyau d'échappement (173; 2110) vers le dispositif d'échappement (171; 2120); et
un silencieux (179; 2190) qui est configuré pour détendre le gaz d'échappement qui circule du dispositif d'échappement (171; 2120) vers le silencieux (179; 2190), et qui est configuré pour libérer le gaz d'échappement vers l'extérieur,
dans lequel au moins une partie arrière (171e) du dispositif d'échappement (171; 2120) est positionnée plus bas que le bras arrière (160; 260) et entre la roue arrière (104; 290) et la partie de châssis verticale (125; 237) et, en vue en plan du dispositif d'échappement (171; 2120) et de la béquille principale (170; 250), au moins la partie arrière (171e) du dispositif d'échappement (171; 2120) est positionnée entre la paire de branches de support (170b, 170i; 251, 252) dans la position disposée de manière à s'étendre dans la direction avant et arrière, et
dans lequel le silencieux (179) est connecté au dispositif d'échappement (171) par l'intermédiaire d'un tuyau de connexion (178),
**caractérisé par le fait que**
le tuyau de connexion (178) s'étend obliquement vers l'arrière vers le côté extérieur de la carrosserie du véhicule à partir d'une surface latérale (171j) du dispositif d'échappement (171), et est connecté au silencieux (179).

3. Véhicule à moteur à deux roues selon la revendication 1, dans lequel
le dispositif d'échappement (24) est disposé de manière à s'étendre vers l'avant à partir de la partie arrière (24e) au-dessous de la partie de châssis verticale (4, 5), en vue latérale de la carrosserie de véhicule.

4. Véhicule à moteur à deux roues selon la revendication 1 ou 2, dans lequel
la béquille principale (26; 170; 250) comporte une partie de connexion (29; 170g) destinée à connecter la paire de branches de support (27, 28; 170b, 170i; 251, 252) l'une à l'autre, et
la partie de connexion (29; 170 g) est disposée de manière à s'étendre dans le sens de la largeur de véhicule à l'arrière du dispositif d'échappement (24; 171; 2120) et au-dessous de la sortie d'échappement (24b) ou du tuyau de connexion (178), dans un état où la paire de branches de support (27, 28; 170b, 170i; 251, 252) sont disposées de manière à s'étendre dans la direction avant et arrière.

5. Véhicule à moteur à deux roues selon la revendication 4, dans lequel
la partie de connexion (29; 107g) est positionnée entre une partie d'extrémité arrière du dispositif d'échappement (24; 171; 2120) et la roue arrière (8; 104; 290), dans l'état où la paire de branches de support (27, 28; 170b, 170i; 251, 252) sont disposées de manière à s'étendre dans la direction avant et arrière.

6. Véhicule à moteur à deux roues selon la revendication 4 ou 5, dans lequel
au moins la partie arrière (24e; 171e) du dispositif d'échappement (24; 171; 2120) est entourée par la paire de branches de support (27, 28; 170b, 170i; 251, 252) et la partie de connexion, dans l'état où la paire de branches de support (27, 28; 170b, 170i; 251, 252) sont disposées de manière à s'étendre dans la direction avant et arrière.

7. Véhicule à moteur à deux roues selon la revendication 4, dans lequel
la partie de connexion est disposée au-dessous d'une extrémité avant de la roue arrière (8; 104; 290), dans l'état où la paire de branches de support (27, 28; 170b, 170i; 251, 252) sont disposées de manière à s'étendre dans la direction avant et arrière.

8. Véhicule à moteur à deux roues selon la revendication 1, dans lequel
la béquille principale (26), dans la position disposée de manière à s'étendre dans la direction avant et arrière, est positionnée plus haut qu'une surface inférieure du dispositif d'échappement (24).

9. Véhicule à moteur à deux roues selon la revendication 1 ou 2, dans lequel
un centre de pivotement de la béquille principale (26; 170; 250) est positionné plus haut que la partie la plus basse du dispositif d'échappement (24; 171; 2120).

10. Véhicule à moteur à deux roues selon la revendication 2, dans lequel
en vue latérale de la carrosserie de véhicule, la paire de branches de support (170b, 170i; 251, 252) sont positionnées plus bas que le dispositif d'échappement (171; 2120), dans un état dans lequel la paire de branches de support (170b, 170i; 251, 252) sont disposées de manière à s'étendre dans la direction avant et arrière.

11. Véhicule à moteur à deux roues selon la revendication 2, dans lequel
le dispositif d'échappement (171; 2120) est disposé plus en arrière que la partie de châssis verticale (125; 237).

12. Véhicule à moteur à deux roues selon la revendication 2, comprenant par ailleurs une unité de coussin (270) connectée au bras arrière (160; 260) pour absorber les chocs reçus par la roue arrière (104; 290), dans lequel
une extrémité inférieure de l'unité de coussin (270) est connectée directement au bras arrière (160; 260), non pas par l'intermédiaire d'un mécanisme de liaison.

13. Véhicule à moteur à deux roues selon la revendication 12, dans lequel une extrémité supérieure de l'unité de coussin (270) est connectée directement au châssis de véhicule (124; 230), non pas par l'intermédiaire du mécanisme de liaison.

14. Véhicule à moteur à deux roues selon la revendication 12, comprenant par ailleurs un filtre à air (241) destiné à purifier l'air à alimenter vers le moteur (102; 240), dans lequel
le filtre à air (241) est disposé derrière l'extrémité supérieure de l'unité de coussin (270).
